# EUROPÄISCHE PATENTSCHRIFT

(11) **EP 4 204 203 B1**
(45) Veröffentlichungstag und Bekanntmachung des Hinweises auf die Patenterteilung: **26.02.2025**
(21) Anmeldenummer: 21815939.0
(22) Anmeldetag: 15.11.2021
(51) Int. Cl.: B29C 49/78, B29C 49/06, B29K 67/00, B29L 31/00, B29C 49/20

(54) **ANLAGE UND VERFAHREN ZUM BETREIBEN EINER ANLAGE ZUR BEHANDLUNG VON BEHÄLTNISSEN**
SYSTEM AND METHOD FOR OPERATING A SYSTEM FOR TREATING CONTAINERS
SYSTÈME ET MÉTHODE POUR FAIRE FONCTIONNER UN SYSTÈME DE TRAITEMENT DE RÉCIPIENTS

(30) Priorität: 26.11.2020 DE 102020131365
(43) Veröffentlichungstag der Anmeldung: 05.07.2023
(60) Teilanmeldung: 24211419.7
(73) Patentinhaber: Krones AG, 93073 Neutraubling (DE)
(72) Erfinder: AMANN, Ottmar, 93073 Neutraubling (DE); WENZL, Stefan, 93073 Neutraubling (DE); JÄGER, Stephan, 93073 Neutraubling (DE); STRICKROTH, Marcel, 93073 Neutraubling (DE); MEHRINGER, Katarina, 93073 Neutraubling (DE); BREITSCHAEDEL, Sandra, 93073 Neutraubling (DE); HÜTTNER, Gerald, 93073 Neutraubling (DE)
(74) Vertreter: Hannke Bittner & Partner mbB Regensburg
(86) Internationale Anmeldenummer: PCT/EP2021/081749
(87) Internationale Veröffentlichungsnummer: WO 2022/112048

(56) Entgegenhaltungen:
- EP-A1- 2 295 226
- DE-A1- 102017 120 201
- DE-A1- 102018 127 264
- US-A1- 2007 182 562
- US-A1- 2019 234 975

## Beschreibung

Die vorliegende Erfindung bezieht sich auf eine Anlage und ein Verfahren zum Betreiben einer Anlage zur Behandlung von Behältnissen sowie ein System zur Behandlung von Behältnissen. Anlagen zur Behandlung von Behältnissen und Verfahren zum Betrieb dieser sind aus dem Stand der Technik seit längerem bekannt. Die vorliegende Erfindung betrifft dabei Behältnisse und insbesondere Kunststoffbehältnisse. Bei den Behältnissen kann es sich dabei um Behältnisse aus der Getränke- und/oder Lebensmittel- und/oder Kosmetikindustrie handeln. Beispielsweise kann es sich um Flaschen, wie etwa Glasflaschen und Kunststoffflaschen handeln. Besonders bevorzugt handelt es sich um Mehrweg-Behältnisse, die etwa nach deren Verwendung durch einen Verbraucher wieder dem Produktkreislauf zugeführt und hierfür etwa gereinigt und/oder recycelt werden.

Insbesondere betrifft die vorliegende Erfindung eine Behältnis-Serialisierung, wie etwa die Flaschenserialisierung. Bei einer Flaschenserialisierung werden insbesondere die einzelnen Flaschen - insbesondere eindeutig - markiert, beispielsweise durch Anbringung einer eindeutigen Kennzeichnung, und sind damit individuell, (jeweils) paarweise, voneinander unterscheidbar.

Im Bereich der Serialisierung von Flaschen gibt es im Stand der Technik diverse Ansätze, so können einzigartige IDs (Identifikatoren) beispielsweise über das Etikett angebracht werden.

Jedoch ist diese Form der Serialisierung nicht für alle angedachten Anwendungsfälle geeignet. Für einige dieser Anwendungsfälle wäre der Zeitpunkt der Aufbringung der ID zu spät, da beispielsweise bei einem Kunststoffbehältnis meist erst nach dem Füllvorgang und definitiv erst nach dem Aufheiz- und Blasvorgang etikettiert wird.

Aus den Anlagen und den Verfahren zum Betrieb dieser, die derzeit aus dem Stand der Technik bekannt sind, ergibt sich unter anderem der Nachteil, dass bisherige Lösungen zur Behältnis-Serialisierung zu spät in der Prozesskette eingreifen und damit nicht in die angedachten Anwendungsfälle integriert werden können. Weiterhin ergibt sich der Nachteil, dass in einem frühen Prozessstadium während einer Flaschenherstellung gesammelte Messwerte nicht jeder Flasche individuell zugewiesen werden können. Beispielsweise sind die Preforms (Kunststoffvorformlinge) üblicherweise noch nicht eindeutig markiert.

Aus der US 2019/234975 A1 ist ein System zur Durchführung einer Molekularanalyse bekannt, welches eine Schale mit mehreren Mulden zur Aufnahme der Reagenzien mit einem RFID-Tag nutzt. Mittels diesem RFID-Tag können Informationen beispielsweise für einen Workflow einer Molekularanalyse gesendet oder empfangen werden. Die Informationen können beispielsweise anzeigen, dass es Zeit ist bestimmte Reagenzien zu bestellen, die der Schale hinzugefügt werden, oder ein Produktcode des zu bestellenden Reagens sein.

Aus der DE 10 2018 127264 A1 ist ein Überwachungsverfahren für eine Überwachung einer Folienblase in einem Austrittsbereich nach einer Austrittsdüse einer Blasfolienvorrichtung bekannt.

Aus der EP 2 295 226 A1 der Anmelderin ist eine Behältnisbehandlungsanlage zur Behandlung von mit einem Produkt befüllbaren Behältnissen mit einer Vielzahl von Behandlungselementen bekannt. Jedem Behandlungselement ist ein Behältnis-Sollwert zugeordnet, welcher angibt, welche Art von Behältnis das Behandlungselement behandeln kann.

Der vorliegenden Erfindung liegt die Aufgabe zugrunde, die aus dem Stand der Technik bekannten Nachteile zu überwinden und eine Anlage zum Behandeln von Behältnissen sowie ein Verfahren zum Betrieb der Anlage bereitzustellen, in welcher zu möglichst jedem Prozessstadium möglichst alle zur Verfügung stehenden Informationen und Messdaten sowie Prozess- und Produktdaten zugänglich sind.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zum Betreiben einer Anlage zur Behandlung einer Vielzahl von Behältnissen, insbesondere Flaschen, bevorzugt Kunststoffbehältnisse, wird wenigstens ein Behältnis (und bevorzugt eine Vielzahl von Behältnissen) bereitgestellt, welches (bevorzugt jeweils) ein, insbesondere maschinenlesbares, Identifikationsmittel aufweist, mittels welchem das Behältnis eindeutig identifizierbar ist. Bei dem Behältnis handelt es sich bevorzugt um ein Getränkebehältnis oder ein Behältnis aus der Lebensmittel- oder Kosmetikindustrie. Dabei kann es sich um einen Kunststoffvorformling oder um ein fertig ausgeformtes Behältnis wie eine Flasche handeln. Insbesondere betrifft das Verfahren ein Behandeln von Behältnissen in einer Weise die die Rück- und/oder Nachverfolgbarkeit einer Behandlung ermöglichen.

Dabei ist dem (jeweiligen) Identifikationsmittel ein Identifikator - insbesondere eindeutig - zuordenbar (und/oder zugeordnet), welcher in einer, insbesondere Cloud-basierten, Speichereinrichtung abgelegt und/oder ablegbar ist. Bevorzugt ist die Speichereinrichtung zur Datenkommunikation wenigstens zeitweise über ein öffentliches Netzwerk - wie über das Internet - mit der Anlage verbundenen oder verbindbar.

Weiterhin wird das Behältnis (bevorzugt die Vielzahl an Behältnissen) mit wenigstens einer Behandlungsvorrichtung der Anlage behandelt. Denkbar ist, dass die Anlage lediglich eine Behandlungsvorrichtung aufweist. Bevorzugt weist die Anlage allerdings wenigstens zwei und besonders bevorzugt eine Vielzahl (verschiedener) Behandlungsvorrichtungen auf. Bevorzugt durchläuft die Vielzahl der Behältnisse (insbesondere nacheinander und/oder vereinzelt) - bevorzugt geordnet in einem Behältnisstrom - insbesondere all diese Behandlungsvorrichtungen und wird insbesondere von diesen behandelt.

Bevorzugt wird das Behältnis wenigstens zeitweise in der (bevorzugt gesamten) Behandlungsvorrichtung (bevorzugt wenigstens abschnittsweise in der und besonders bevorzugt in der gesamten Anlage) mit wenigstens einer Transporteinrichtung entlang eines vorgegebenen Transportpfads in einer Transportrichtung transportiert. Bevorzugt transportiert die Transporteinrichtung das Behältnis (jeweils) während dessen Behandlung und/oder bei der Behältniszu- und/oder -abführung in die bzw. aus der Behandlungsvorrichtung.

Weiterhin wird (insbesondere in der Behandlungsvorrichtung) - bevorzugt für jedes Behältnis - wenigstens ein Datenwert in Bezug auf das Behältnis (bevorzugt jeweils in Bezug auf das jeweilige Behältnis der Vielzahl von Behältnissen) und/oder in Bezug auf wenigstens einen Behandlungsschritt des (insbesondere jeweiligen) Behältnisses (insbesondere vorgenommen durch die Behandlungsvorrichtung) erhoben.

Weiterhin wird (insbesondere jeweils bzw. für jedes Behältnis) der wenigstens eine Datenwert zur Übermittlung und/oder Ablegung in der Speichereinrichtung - insbesondere von der Behandlungsvorrichtung - bereitgestellt.

Bevorzugt wird (insbesondere jeweils) eine Zuordnung zwischen dem Datenwert (bzw. insbesondere hierfür charakteristische Daten) und dem jeweiligen Identifikator des Behältnisses hergestellt und/oder herstellbar. Bevorzugt wird diese Zuordnung abrufbar in der Speichereinrichtung (insbesondere dauerhaft) abgelegt und kann daher zu einem (jeden) späteren Zeitpunkt von der Speichereinrichtung abgerufen werden.

Unter dem Ausdruck einer Datenkommunikationsverbindung (d. h. Verbindung zur Datenkommunikation) zwischen der Speichereinrichtung und der Anlage und insbesondere der Behandlungsvorrichtung über ein öffentliches Netzwerk ist insbesondere zu verstehen, dass die Datenkommunikation - zumindest zeitweise - zumindest abschnittsweise (bevorzugt vollständig) über das öffentliche Netzwerk (wie das Internet) erfolgt. Insbesondere ist die Speichereinrichtung (wenigstens teilweise und bevorzugt die gesamte Speichereinrichtung) wenigstens zeitweise und/oder wenigstens abschnittsweise mit der Anlage (und insbesondere der Behandlungsvorrichtung) über wenigstens abschnittsweise drahtlose und/oder wenigstens abschnittsweise drahtgebundene (bevorzugt vollständig drahtgebundene) Kommunikationsverbindungen bzw. Kommunikationsleitungen verbunden.

Bevorzugt ist die Speichereinrichtung wenigstens teilweise und bevorzugt die gesamte Speichereinrichtung nicht ausschließlich über ein privates Netzwerk, wie etwa ein firmeninternes Netzwerk mit der Anlage und insbesondere mit der Behandlungsvorrichtung verbunden. Mit anderen Worten kann also nicht ausschließlich über das private Netzwerk oder das firmeninterne Netzwerk (in welchem die Anlage eingebunden ist) auf die Speichereinrichtung zugegriffen werden. Bevorzugt weist eine Datenkommunikationsverbindung zwischen der Anlage und der Speichereinrichtung stets einen Kommunikationsabschnitt auf, welcher insbesondere ausschließlich über ein öffentliches Netzwerk (wie das Internet) zu erfolgen hat.

Möglich ist aber auch, dass die Speichereinrichtung in ihrer Gesamtheit in ein firmeninternes (Kommunikations-)Netzwerk eingebunden ist. Bevorzugt kann in diesem Fall über ein öffentliches Netzwerk auf wenigstens einen Teil der hierauf abgelegten Daten zugegriffen werden.

Unter einer Behandlung des Behältnisses ist insbesondere eine Herstellung, eine Weiterbehandlung und/oder eine Weiterverarbeitung des Behältnisses zu verstehen. Eine Herstellung des Behältnisses kann zum Beispiel ein Blasformvorgang eines Kunststoffvorformlings zu einem (ausgeformten) Kunststoffbehältnis wie einer Kunststoffflasche, aber auch ein Spritzgießvorgang eines Kunststoffvorformlings sein. Eine Weiterbehandlung des Behältnisses kann beispielsweise ein Verschließen, ein Reinigen, ein Sterilisieren, ein Inspizieren, insbesondere auch ein Transportieren, ein Etikettieren, ein Befüllen mit einem Produkt wie einem Getränk, ein Bedrucken und/oder ein Verpacken sein. Unter einer Weiterverarbeitung des Behältnisses ist insbesondere eine Behandlung des Behältnisses nach seiner Auslieferung an einen (Zwischen-)Händler zu verstehen, etwa ein Transport an diesen, ein Verkauf an den Endkunden, ein Recyclingvorgang, ein Reinigungsvorgang des (bereits gebrauchten) Behältnisses zu verstehen.

Bei dem Behandlungsschritt kann es sich dabei um einen (durch die Behandlungsvorrichtung) vorgenommenen und/oder einen vorzunehmenden Behandlungsschritt handeln.

Mit anderen Worten schlägt die vorliegende Erfindung vor, bei zu behandelnden Behältnissen, welche (insbesondere dauerhaft) ein - insbesondere eindeutiges - Identifikationsmittel aufweisen und damit in einem individualisierten Zustand vorliegen, Datenwerte, die bei einer Behandlung dieser Behältnisse erhoben werden, in einer Speichereinrichtung abzulegen, in welcher ebenfalls eine für das Identifikationsmittel charakteristischer und/oder insbesondere eindeutig zuordenbare Information oder Wert (nämlich der Identifikator) abgelegt ist oder (noch) abgelegt wird, abzulegen.

Bevorzugt wird (wenigstens) eine Cloud (als Speichereinrichtung) bzw. (wenigstens) eine Cloud-basierte Speichereinrichtung bereitgestellt, in welcher sowohl wenigstens ein Identifikator und bevorzugt eine Vielzahl an Identifikatoren der einzelnen (bevorzugt aller) Behältnisse, als auch der jeweilige (bevorzugt zu allen behandelten Behältnissen) erhobene Datenwert und besonders bevorzugt alle Datenwerte, welche zu dem Behältnis und besonders bevorzugt, welche zu allen Behältnissen erhoben werden, abgelegt werden.

Es wird also insbesondere vorgeschlagen, (wenigstens) eine (auf der Speichereinrichtung abgelegte) Datenbank bereitzustellen und/oder zu ergänzen und/oder zu aktualisieren, in welcher eine Vielzahl von Identifikatoren (oder hierfür charakteristische Daten) abgelegt sind, welche bevorzugt jeweils einem bereits individualisierten und/oder einem noch zu individualisierenden Behältnis eindeutig zuordenbar sind. Weiterhin ist bevorzugt in der Datenbank eine Vielzahl von Datenwerten abgelegt, welche von wenigstens einer Behandlungsvorrichtung und bevorzugt von einer Vielzahl von Behandlungsvorrichtungen, erhoben wurden und welche jeweils (genau) einem Behältnis und besonders bevorzugt einem Identifikationsmittel und/oder Identifikator zuordenbar sind. Bevorzugt ist die Datenbank derart eingerichtet, dass eine Zuordnung von (insbesondere bestimmten und bevorzugt allen) Datenwerten, die zu einem vorgegebenen Behältnis erhoben wurden, dem zugehörigen Identifikator, welcher ebenfalls in der Datenbank abgelegt ist, möglich und abrufbar ist.

Unter der Erhebung eines Datenwerts wird insbesondere das Erfassen eines Messwerts, das etwa von einer Messeinrichtung wie einem Sensor etc. (etwa an dem Behältnis) durchgeführt, aber auch ein Aufnehmen und/oder Erfassen einer (etwa in einer Speichereinrichtung beispielsweise der Behandlungsvorrichtung abgelegten) Prozessgröße oder eines Prozessparameters, auf Grundlage dessen die Behandlungseinrichtung eine Behandlung (an dem zu behandelnden Behältnis) vornimmt, verstanden werden. Als zu Datenwert kann ebenfalls eine Behandlungsart, wie ein abzufüllendes Produkt, oder auch eine charakteristische Größe für die Art der Behandlungsvorrichtung und/oder Behandlungsorgane verstanden werden. Weiter kann es sich bei dem Datenwert auch um Umweltparameter, wie Temperatur, Druck, Zeit, Ort in Bezug auf die Behandlungsvorrichtung und/oder die Behandlung des Behältnisses handeln.

Die vorliegende Erfindung bietet den Vorteil, dass gesammelte Messwerte wieder jeder Flasche individuell zugewiesen werden können. Insbesondere können alle Datenwerte, welche in Bezug auf ein Behältnis bzw. einer Behandlung dessen von einer Behandlungsvorrichtung und insbesondere von allen Behandlungsvorrichtungen erhoben werden, jedem Behältnis spezifisch zugeordnet werden und die Messwerte (sowie auch die Zuordnung) zu einem späteren Zeitpunkt wieder abgerufen werden. Vorteilhaft soll jede Maschine einer Linie bzw. jede Behandlungsvorrichtung einer Anlage Daten bzw. Datenwerte zu einem Identifikationsmittel und/oder einem Identifikator (und damit zu einem Behältnis bzw. einer Flasche) anreichern können.

Durch die Serialisierung einzelner Behältnisse und insbesondere Flaschen innerhalb einer Produktionslinie und der damit einhergehenden absoluten Rück-/Nachverfolgbarkeit eröffnen sich breit gefächerte Anwendungsbereiche. So kann etwa jedes Behältnis und insbesondere jede Flasche über den Serialisierungscode bzw. das Identifikationsmittel einer Erfassungseinrichtung (wie etwa Checkmaten), Inspektoren oder sonstigen Leseeinheiten mitteilen, wer sie ist, wodurch die Intelligenz der Maschinensteuerung teilweise in die Behältnisse und insbesondere die Flaschen wandert. Dadurch können beispielsweise mithilfe der (eindeutigen) Identifizierung des Behältnisses Behandlungsparameter durch die Behandlungsvorrichtung abgerufen oder bereitgestellt werden.

Weiterhin kann das mit einem Identifikationsmittel versehene Behältnis selbst dazu verwendet werden, die Anlage und insbesondere die Behandlungsvorrichtung und besonders bevorzugt eine Vielzahl von Behandlungsvorrichtungen zu steuern. Entsprechend kann das Prinzip "Flasche steuert Maschine" umgesetzt werden, und in der Produktionslinie zwischen verschiedenen Flaschensorten, Produktsorten und Kombinationen daraus (wissentlich) unterschieden werden. Bevorzugt kann also wenigstens ein auf der Speichereinrichtung abgelegter Datenwert und bevorzugt eine Vielzahl von Datenwerten in Bezug auf einen Identifikator und bevorzugt in Bezug auf eine Vielzahl von Identifikatoren, zur intelligenten Maschinensteuerung verwendet werden. In diesem Zusammenhang wird auf die Offenlegungsschrift DE 10 2017 120 201 A1 verwiesen, deren gesamter Offenbarungsgehalt in Bezug auf eine selbstlernende Maschine und insbesondere Blasmaschine, als in dieser Beschreibung offenbart gelten soll.

Beispielsweise kann eine Anlage eine Linie aufweisen, in der gleichzeitig mehrere verschiedenartige Produkte hergestellt werden können, da mittels der eindeutigen Codierung (insbesondere auf Grundlage des Identifikationsmittels) des Behältnisses und insbesondere der Flasche und den zu diesem bzw. dieser (bevorzugt auf der Speichereinrichtung) hinterlegten Informationen (in der Datenbank) insbesondere der jeweiligen Behandlungsvorrichtung bzw. Maschine, beispielsweise einem Füller, mitgeteilt werden kann, dass sich im nächsten Takt das Behältnis "XY" in der Zuführung befindet und daher das Produkt "AB" in ein vorgegebenes Füllventil (Füllventil "XX") eingeleitet werden muss.

Bei einem bevorzugten Verfahren stellt eine Identifikator-Erzeugungseinrichtung der Anlage den - insbesondere eindeutigen - Identifikator und bevorzugt eine Vielzahl an Identifikatoren bereit, welche zu einer eindeutigen Identifizierung eines Behältnisses geeignet und bestimmt sind. Bei dem Identifikator kann es sich beispielsweise um eine numerische Größe oder eine Zeichenkombination handeln. Bevorzugt weist die Identifikator-Erzeugungseinrichtung eine Prozessoreinrichtung auf, welche insbesondere nach einem vorgegebenen Verfahren eine Vielzahl an Identifikatoren erzeugt. Dabei kann die Identifikator-Erzeugungseinrichtung auch eine Vergleichseinrichtung aufweisen, welche einen erzeugten Identifikator mit einer Vielzahl vorhandener und/oder in einem ID-Pool abgelegter und/oder abrufbarer Identifikatoren vergleicht und überprüft, ob dieser erzeugte Identifikator bereits verwendet und/oder zuvor erzeugt wurde.

Die Identifikator-Erzeugungseinrichtung ist bevorzugt ein Skript bzw. ein eigenständiges Programm, das direkt auf einer Individualisierungseinrichtung, welche dazu geeignet und bestimmt ist, ein Behältnis mit einem Identifikator zugeordneten Identifikationsmittel zu versehen, etwa auf einer ID-Druckeinrichtung, installiert ist. Denkbar ist aber auch, dass ein externes System vorhanden ist, auf welchem ein derartiges Skript läuft. Bevorzugt kann von der Anlage und insbesondere von der Individualisierungseinrichtung ein einzelner Identifikator und bevorzugt eine Vielzahl von Identifikatoren abgerufen werden, beispielsweise auch im Rahmen einer SaaS ("Software as a Service")-Anwendung. Bevorzugt besteht wenigstens zeitweise eine (Kommunikations-)Verbindung zwischen der Individualisierungseinrichtung (als Hardware) und der Identifikator-Erzeugungseinrichtung (dem ID-Generator), welche insbesondere als Software oder als Softwareservice umgesetzt sein kann.

Grundsätzlich ist eine einzige Identifikator-Erzeugungseinrichtung je Anlage und für die Vielzahl an Behältnisvorrichtungen, welche ein vorgegebenes Behältnis (in und insbesondere auch außerhalb einer Anlage) behandeln, ebenfalls lediglich eine einzige Identifikator-Erzeugungseinrichtung erforderlich. Möglich ist aber, dass mehrere (miteinander abgestimmte) Identifikator-Einrichtungen vorhanden sind, welche insgesamt allerdings ebenfalls jeweils paarweise zueinander verschiedene Identifikatoren erzeugen.

Möglich ist, wie beschrieben, dass die IDs durch einen ID-Generator (die Identifikator-Erzeugungseinrichtung), initiiert etwa durch eine Anfrage nach einer neuen ID, erzeugt werden. Möglich ist aber auch, dass die IDs nicht erzeugt werden, sondern aus einem ID-Pool abgerufen werden. In beiden Fällen ist der ID-Generator bzw. die Identifikator-Erzeugungseinrichtung für das Bereitstellen eindeutiger Identifikatoren (IDs) verantwortlich.

Bevorzugt kann die Identifikator-Erzeugungseinrichtung einen - insbesondere eindeutigen - Identifikator aus einem (insbesondere in elektronisch abgelegter Form vorliegenden) ID-Pool (welcher auch auf der (Cloud-basierten) Speichereinrichtung abgelegt sein kann) und besonders bevorzugt eine Vielzahl an Identifikatoren abrufen und einer Individualisierungseinrichtung, welche ein Behältnis mit einem dem Identifikator eindeutig zuordenbaren Identifikationsmittel versieht, bereitstellen und/oder übermitteln. Der ID-Pool stellt bevorzugt der Identifikator-Erzeugungseinrichtung eine Ansammlung (Pool) an Identifikatoren (IDs) zur Verfügung. Bevorzugt unterliegen dabei die IDs einem Algorithmus und/oder Regeln, so dass beispielsweise durch Codierung von der ID bzw. dem Identifikator auf das Produktionsdatum geschlossen werden kann. Bevorzugt ist jede ID eindeutig.

Bevorzugt wird, insbesondere zur Individualisierung eines Behältnisses, (insbesondere je) einem Identifikator - insbesondere eindeutig - ein Identifikationsmittel zugeordnet, welches dazu geeignet und bestimmt ist, ein mit dem Identifikationsmittel versehenes und/oder gekennzeichnetes Behältnis individuell und/oder eindeutig zu identifizieren.

Denkbar ist, dass eine eineindeutige Zuordnung zwischen je einem ein Identifikationsmittel aufweisenden Behältnis und (genau) einem (erzeugten und/oder in dem ID-Pool vorhandenen und/oder in der Speichereinrichtung abgelegten) Identifikator möglich ist. Denkbar ist aber auch, dass lediglich eine eindeutige Zuordnung eines ein Identifikationsmittel aufweisendes Behältnisses mit einem (erzeugten und/oder in dem ID-Pool vorhandenen und/oder in der Speichereinrichtung abgelegten) Identifikator möglich ist. Dies bedeutet, dass etwa mehrere (auch noch nicht verwendete) Identifikatoren in dem ID-Pool vorhanden sein können oder in der (insbesondere Cloud-basierten) Speichereinrichtung abgelegt sein können.

Bei dem Identifikationsmittel kann es sich beispielsweise um einen 2-D Barcode, Strichcode, Matrix- Codes(QR-Code, Data Matrix, MaxiCode, Aztec-Code, JAB-Code, Han-Xin-Code etc.), eine induktiv mit Energie versorgbare Drahtloskommunikationseinrichtung, welche, bevorzugt bei induktiver Energieversorgung, zur drahtlosen Übermittlung von Daten geeignet und bestimmt ist, insbesondere eine RFID-Kommunikationseinrichtung (engl. Radio-frequency identification) bzw. RFID-Transponder und dergleichen handeln. Das Identifikationsmittel kann auf optische, elektronische, magnetische und/oder haptische bzw. taktile Weise mittels einer Erfassungseinrichtung maschinenlesbar sein. Zur drahtlosen Übermittlung von Daten sind Betriebsfrequenzen von 13,56 MHz (HF) oder 860-960 MHz (UHF) sowie 125 kHz (LF) bekannt.

Als besonders geeignet haben sich Identifikationsmittel erwiesen, welche schnell und insbesondere innerhalb 80 ms auslesbar sind. Bevorzugt weist das Identifikationsmittel, wie die RFID-Kommunikationseinrichtung, eine Speichergröße von wenigstens 50 Byte, bevorzugt wenigstens 100 Byte und besonders bevorzugt 144 Byte. Bevorzugt weist das Identifikationsmittel eine Speichergröße von maximal 250 Byte, bevorzugt maximal 144 Byte auf. Bevorzugt weist das Identifikationsmittel eine geometrische Ausdehnung von mindestens 1 mm, bevorzugt wenigstens 5 mm und besonders bevorzugt wenigstens 10 mm in eine Richtung und/oder eine geometrische Ausdehnung von mindestens 1 mm, bevorzugt wenigstens 5 mm und besonders bevorzugt wenigstens 10 mm in eine hierzu senkrechte Richtung auf.

Bevorzugt weist das Identifikationsmittel eine geometrische Ausdehnung von maximal 50 mm, bevorzugt wenigstens 10 mm und besonders bevorzugt wenigstens 5 mm in eine Richtung und/oder eine geometrische Ausdehnung von mindestens 50 mm, bevorzugt wenigstens 10 mm und besonders bevorzugt wenigstens 5 mm in eine hierzu senkrechte Richtung auf.

Bevorzugt weisen Matrix- Codes eine Codegröße von mehr als 22 x 22 Dot's auf. Bevorzugt ist das Identifikationsmittel und insbesondere das Behältnis, welches das Identifikationsmittel aufweist, dazu geeignet und bestimmt, dass das Identifikationsmittel dauerhaft in oder an dem Behältnis verbleibt und hierdurch das Behältnis nach dessen Individualisierung bevorzugt dauerhaft in diesem individualisierten Zustand verbleibt. Insbesondere weist das Behältnis nach der erstmaligen Individualisierung das Identifikationsmittel in allen (nachfolgenden) Behandlungsvorrichtungen auf, in denen es (insbesondere vor dessen Verpackung und/oder Auslieferung an den Kunden) behandelt wird. Besonders bevorzugt weist das Behältnis das Identifikationsmittel auch nach dem Verkauf an den Endkonsument aus. Bevorzugt ist das Identifikationsmittel fest (nicht zerstörungsfrei entfernbar) an dem Behältnis angeordnet oder eingebracht. So kann das Behältnis auch an einem Verkaufsort und/oder Recyclingort erfasst und identifiziert werden.

Bevorzugt weist die Anlage und insbesondere eine Herstellungsvorrichtung, welche zur Herstellung eines Behältnisses und/oder Kunststoffvorformlings geeignet und bestimmt ist, eine Individualisierungseinrichtung auf, welche das Behältnis (zu dessen - insbesondere eindeutiger - Individualisierung) mit dem Identifikationsmittel versieht bzw. hierzu geeignet und bestimmt ist. Bei einer Herstellungsvorrichtung kann es sich etwa um eine Blasformvorrichtung und/oder eine Spritzgießvorrichtung und/oder eine Vorrichtung zur Herstellung von Glasbehältnissen handeln. Bevorzugt wird (durch die Individualisierungseinrichtung) das Identifikationsmittel auf dem Behältnis angeordnet und/oder angebracht und/oder eingebracht.

Es ist möglich, dass die Individualisierungseinrichtung in der (Behandlungs-)Linie der Vielzahl an Behältnissen, bevorzugt an der Transporteinrichtung der Behandlungsvorrichtung, angeordnet ist und bevorzugt in der (Behandlungs-)Linie und/oder in der Anlage miteingebunden ist. Die Individualisierungseinrichtung kann beispielsweise zwischen zwei Behandlungsvorrichtungen der Anlage angeordnet sein, wobei ein zu individualisierendes Behältnis von einer Transporteinrichtung der einen (ersten) Behandlungsvorrichtung zur Individualisierungseinrichtung transportiert wird und von dort von derselben oder einer dieser nachfolgenden Transporteinrichtung an eine zweite Behandlungsvorrichtung übergeben wird. Bevorzugt werden alle Behältnisse, welche an die Individualisierungseinrichtung transportiert werden, zur zweiten Behandlungsvorrichtung transportiert und/oder an diese übergeben. Bevorzugt werden an die Individualisierungseinrichtung (im Wesentlichen) ausschließlich Behältnisse von der ersten Behandlungsvorrichtung transportiert und/oder übergeben.

Die Individualisierungseinrichtung muss allerdings nicht zwangsläufig in der Linie angeordnet sein. Denkbar ist beispielsweise, dass eine Individualisierungseinrichtung mehreren, voneinander verschiedenen Linien und/oder mindestens zwei, voneinander verschiedenen Anlagen zur Behandlung einer voneinander verschiedenen Vielzahl von Behältnissen zugeordnet sein kann. Dies bietet den Vorteil, dass die Individualisierung beispielsweise sowohl für Einweg-PET- als auch Mehrweg-PET-Behältnisse, oder auch Glasbehältnisse, Dosen und dergleichen gilt bzw. (lediglich) eine Individualisierungseinrichtung für Behältnisse verschiedenen Typs, welche etwa in voneinander verschiedenen Anlagen behandelt werden, verwendet werden kann. Bevorzugt ist die Individualisierungseinrichtung derart in wenigstens eine und bevorzugt wenigstens zwei (voneinander verschiedene) Anlagen eingebunden, dass sie zu individualisierende Behältnisse von wenigstens zwei verschiedenen Behandlungsvorrichtungen (welche bevorzugt Teil zweier voneinander verschiedenen Anlagen sind) (insbesondere via zweier wenigstens abschnittsweise und bevorzugt vollständig voneinander verschiedenen Transporteinrichtungen) und/oder von ihr individualisierte Behältnisse an wenigstens zwei voneinander verschiedene Behandlungsvorrichtungen (welche bevorzugt Teil zweier voneinander verschiedenen Anlagen sind) transportiert und/oder übergibt (insbesondere via zweier wenigstens abschnittsweise und bevorzugt vollständig voneinander verschiedenen Transporteinrichtungen).

Bevorzugt weist die Individualisierungseinrichtung eine Druckeinrichtung und insbesondere eine Direktdruckeinrichtung (einen sogenannten "ID Printer") auf, welche bevorzugt dazu geeignet und bestimmt ist, eine Behältniswandung und/oder den Kunststoffvorformling direkt und/oder unmittelbar zu bearbeiten und insbesondere zu bedrucken.

Bevorzugt weist die Individualisierungseinrichtung einen Laser, insbesondere einen CO₂-Laser auf, mittels welchem ein Identifikationsmittel (etwa ein QR-Code) auf einem Behältnis (etwa einem Kunststoffvorformling) angebracht werden kann.

Bevorzugt weist die Individualisierungseinrichtung einen Tintenstrahl-Drucker, etwa einen InkJet-Drucker, auf, mittels welchem ein Identifikationsmittel (etwa ein (QR-)Code) auf einem Behältnis (etwa einem Kunststoffvorformling) angebracht werden kann.

Denkbar ist auch, dass die Individualisierungseinrichtung eine Druckeinrichtung zum Aufbringen von Tinte, insbesondere Tinte, welcher erst bzw. lediglich unter UV-Licht-Einstrahlung fluoresziert, aufweist. Dies bietet den Vorteil, dass die Wahl eines solchen Identifikationsmittels das äußere, optisch von einem Konsumenten wahrnehmbare Erscheinungsbild des Behältnisses nicht beeinträchtigt wird.

Bevorzugt wird die Individualisierung im unverstreckten Bereich der Preform aufgebracht, besonders bevorzugt im Bereich bis 10 mm unterhalb des Preformtragrings.

Darüber hinaus kann die Individualisierungseinrichtung auch Werkzeuge aufweisen, die während und/oder unmittelbar nach einem Spritzgieß-Verfahrens die Oberfläche des herzustellenden Behältnisses behandeln und/oder ein Individualisierungsmittel (z. B. einen Transponder) in ein Behältnis, etwa eine Wandung des herzustellenden Behältnisses, einbringen, insbesondere derart, dass das Individualisierungsmittel, insbesondere von allen Seiten, von - insbesondere demselben - Material umgeben ist.

Bei einem weiter bevorzugten Verfahren werden die Behältnisse während ihrer Herstellung und/oder zeitlich vor und/oder während einem Umformvorgang von einem Kunststoffvorformling zu dem Kunststoffbehältnis, mit dem Identifikationsmittel versehen. Bevorzugt werden die Kunststoffvorformlinge zeitlich vor einem Erwärmen der Kunststoffvorformlinge (in einer Erwärmungseinrichtung bzw. in einem Ofen) mit dem Identifikationsmittel versehen. Dies bietet den Vorteil, dass die Serialisierung in möglichst vielen bzw. in allen Prozessschritten genutzt werden kann, wenn schon vor dem Erwärmen der Kunststoffvorformling bzw. ein Preform im Ofen eine eindeutige Kennzeichnung aufweist. Insbesondere ist hierzu bevorzugt (zwingend) nötig, die Information schon auf der Preform anzubringen (im Unterschied zum Stand der Technik).

Es wird also vorgeschlagen, eine Kennzeichnung bzw. Individualisierung (über Identifikationsmittel) von Kunststoffvorformlingen bzw. Preforms bereits zu einem sehr frühen Prozessstadium zu nutzen, um abhängig von den mit dem (zugeordneten) Identifikator verheirateten (bzw., etwa in der Speichereinrichtung abgelegten und mit dem Identifikator verknüpften) Informationen Parameter in der Anlage und insbesondere in der Behandlungsvorrichtung oder in einer Vielzahl von Behandlungsvorrichtungen zu steuern und/oder gesammelte Messwerte bzw. Datenwerte wieder jedem Behältnis individuell zuzuweisen.

Üblicherweise weist ein Kunststoffvorformling einen bereits fertig ausgebildeten Bereich, beispielsweise einen Mündungsbereich mit bereits fertig ausgebildetem Gewinde oder einen Tragring, und wenigstens einen zu verstreckenden Bereich (wie etwa ein Grundkörper des Kunststoffvorformlings) auf. Der zu verstreckende Bereich wird dabei typischerweise im Rahmen eines (Streck-)Blas-Umformungsverfahrens durch Beaufschlagung mit einem unter Druck befindlichen fluidem Medium insbesondere in Längsrichtung expandiert und bevorzugt gegen eine einen Hohlraum ausbildende Blasformeinrichtung gedehnt.

Bevorzugt wird ein Kunststoffvorformling (von der Individualisierungseinrichtung) insbesondere an einem zu verstreckenden Abschnitt des Kunststoffvorformlings mit einem Identifikationsmittel versehen. Bevorzugt wird daher der Kunststoffvorformling nicht an einem Mündungsbereich oder an einem Tragring (wenngleich ebenso möglich) mit einem Identifikationsmittel versehen, sondern an dem Bereich des Grundkörpers, insbesondere an einer Seitenwandung des Grundkörpers. Bevorzugt wird als Identifikationsmittel ein solches verwendet, welches bei einem Umformungsverfahren des Kunststoffvorformlings zu dem Kunststoffbehältnis ebenfalls expandiert wird. Bevorzugt ist das Identifikationsmittel dazu geeignet und bestimmt, (auch) nach seiner räumlichen Ausdehnung in wenigstens eine Dimension und bevorzugt in wenigstens zwei Dimensionen, in einem maschinenlesbaren Zustand vorzuliegen.

Bevorzugt wird als Identifikationsmittel ein QR-Code verwendet (welcher etwa in die Wandung des Kunststoffvorformlings eingeprägt und bevorzugt aufgedruckt wird, um eine Beeinflussung der Stabilität des Behältnisses durch Bereiche unterschiedlicher Wandungsdicke zu vermeiden). Ein sogenannter "aufblasbarer QR-Code" bietet den Vorteil, dass ein solcher nicht nur (gleichsam bzw. gleichwirkend zum Aufbringen eines Rasters) für die Erkennung von Streckgraden in der Blasmaschine bzw. in einer (Streck-)Blasvorrichtung verwendet werden kann, sondern eine Möglichkeit bietet, die Behältnisse zu einem äußerst frühen Prozessstadium bereits zu individualisieren, nämlich bereits bei der Herstellung der Kunststoffvorformlinge.

Bevorzugt weist die Anlage eine Erwärmungsvorrichtung für Kunststoffvorformlinge zum Erwärmen dieser auf, bevor die Kunststoffvorformlinge in einer Blasmaschine (bzw. einer (Streck-)Blasvorrichtung) zu einem Kunststoffbehältnis expandiert werden.

Bevorzugt weist die Behandlungsvorrichtung, insbesondere die Erwärmungsvorrichtung, eine Erfassungseinrichtung auf, welche dazu geeignet und bestimmt ist, das Identifikationsmittel des Kunststoffvorformlings zu erfassen. Bevorzugt wird auf Grundlage des erfassten Identifikationsmittels wenigstens ein Wert, insbesondere eine Prozessgröße, zur Steuerung wenigstens einer Behandlungsvorrichtung, insbesondere der Erwärmungsvorrichtung abgeleitet.

Dies bietet den Vorteil der Verwendung serialisierter Behältnisse im Rahmen der Preformaufheizung, insbesondere bei Erwärmungsvorrichtungen, welche dazu geeignet und bestimmt sind, jedes Behältnis individuell und insbesondere jeweils zwei unmittelbar nacheinander folgende Behältnisse in verschiedener Weise zu erwärmen (z. B. sogenannte "Flexwave"-Erwärmungseinrichtungen). So können die Identifikationsmittel vor dem Eintritt in die Erwärmungsvorrichtung (bzw. den Ofen) erfasst und/oder ausgelesen werden und, etwa in der Maschinensteuerung, das für den jeweiligen Kunststoffvorformling benötigte Aufheizmuster hinterlegt werden. Dadurch können vorteilhaft in einer Erwärmungseinrichtung (bzw. in einem Ofen) verschiedenste Behältnisgrößen (Preformgrößen) in einer Linie auf den Weg gebracht und behandelt werden. Dies ermöglicht vorteilhaft, den nachfolgenden Blasvorgang (der Kunststoffvorformlinge zu den Kunststoffbehältnissen) so anzupassen, dass zeitgleich verschiedene Behältnisformen und/oder Behältnisgrößen herstellbar sind. Eine derartige Steuerung kann beispielsweise eine Parallelschaltung zweier oder mehrerer Blasmodule bzw. Blasvorrichtungen zum Umformen von Kunststoffvorformlingen zu Kunststoffbehältnissen oder eine Blasmaschine bzw. eine Blasvorrichtung mit verschiedenen Kavitäten (bzw. Blasformeinrichtungen) aufweisen.

Bei einem weiter bevorzugten Verfahren wird das Identifikationsmittel wenigstens einmal und bevorzugt mehrmals, bevorzugt durch eine Erfassungseinrichtung erfasst, insbesondere bevor das Behältnis aus der Behandlungsvorrichtung abgeführt wird. Bevorzugt wird in jeder Behandlungsvorrichtung der Anlage das Identifikationsmittel wenigstens einmal und besonders bevorzugt mehrmals erfasst. Beispielsweise kann (jeweils) zur Erhebung eines Datenwerts das Identifikationsmittel erfasst (und zusammen mit dem Datenwert zur Übermittlung an die Speicheinrichtung bereitgestellt werden). Ein wenigstens einmaliges Erfassen des Identifikationsmittels (jedes) des Behältnisses bietet den Vorteil, dass so bekannt ist, wo sich das Behältnis gerade befindet.

Bevorzugt wird unmittelbar nach der Herstellung des Behältnisses und/oder nach der Herstellung eines Kunststoffvorformlings durch eine Erfassungseinrichtung das Identifikationsmittel erfasst, besonders bevorzugt stromaufwärts vor der Erwärmungseinrichtung für Kunststoffvorformlinge. Bevorzugt ist zwischen je einer Behandlungseinrichtung von (je) zwei verschiedenen Behandlungsvorrichtungen (welche insbesondere in einem eigenen Gehäuse angeordnet sind) wenigstens eine Erfassungseinrichtung zur Erfassung des Identifikationsmittels angeordnet. Bevorzugt wird das Identifikationsmittel des Behältnisses vor Verlassen der jeweiligen Behandlungsvorrichtung erfasst und insbesondere (zusammen mit wenigstens einem Datenwert) an die wenigstens eine Speichereinrichtung übermittelt.

Bevorzugt weist eine Kontrolleinrichtung, welche die vorgenommene Behandlung an dem Behältnis kontrolliert, beispielsweise eine Inspektionseinrichtung, eine Erfassungseinrichtung auf, welche zusammen mit den Messdaten ebenfalls das Identifikationsmittel des Behältnisses erfasst.

Bei einem weiter bevorzugten Verfahren ist der Datenwert aus einer Gruppe ausgewählt, die verschiedene Arten von Datenwerten, wie Informationen bzw. (hierfür charakteristische) Daten in Bezug auf das Behältnis, auf einen Messwert, auf einen Behandlungsparameter, auf einen Prozessdatenwert, auf einen Zeitstempel, auf ein Produktionsdatum des Behältnisses, auf einen Produktionsort, auf ein Produkt für das Behältnis, auf einen Abfüll-Zeitstempel eines Produkts in das Behältnis, auf einen Abfüllort eines Produkts in das Behältnis, auf die Behandlungsvorrichtung (oder wenigstens ein Element dieser Behandlungsvorrichtung), auf Maschinendaten, auf eine Umverpackung, auf die Transporteinrichtung, auf eine Vertriebsmodalität, auf einen Vertriebsort (PoS) und dergleichen enthält. Bevorzugt werden eine Vielzahl von Datenwerten verschiedener Art erhoben und zur Übermittlung bereitgestellt und besonders bevorzugt an die Speichereinrichtung übermittelt.

Bei einem weiter bevorzugten Verfahren werden wenigstens zwei Datenwerte und bevorzugt eine Vielzahl von Datenwerten verschiedener Art erhoben, welche demselben Identifikationsmittel und/oder demselben Identifikator zuordenbar sind und welche bevorzugt durch wenigstens zwei und besonders bevorzugt eine Vielzahl verschiedener Behandlungsvorrichtungen, erhoben werden. Besonders bevorzugt werden (im Wesentlichen) alle erhobenen Datenwerte an die Speichereinrichtung übermittelt und/oder zur Übermittlung bereitgestellt.

Die vorliegende Erfindung ist weiterhin gerichtet auf eine Anlage zur Behandlung einer Vielzahl von Behältnissen, insbesondere Flaschen, bevorzugt Kunststoffbehältnisse, mit wenigstens einer Behandlungsvorrichtung, welche dazu geeignet und bestimmt ist, an den Behältnissen wenigstens einen Behandlungsschritt vorzunehmen.

Bevorzugt weist die Anlage wenigstens eine Transporteinrichtung auf, welche dazu geeignet und bestimmt ist, die Behältnisse wenigstens zeitweise in der Behandlungsvorrichtung zu transportieren.

Dabei weist die (bevorzugt eine jede) Behandlungsvorrichtung wenigstens eine Datenerhebungseinrichtung auf, welche zur Datenerhebung wenigstens eines Datenwerts in Bezug auf das Behältnis und/oder in Bezug auf wenigstens einen Behandlungsschritt geeignet und bestimmt ist. Bei der Datenerhebungseinrichtung kann es sich beispielsweise um eine Kontrolleinrichtung insbesondere zur Kontrolle und Überwachung sowie Protokollierung von Produktionsdaten (wie eine Füllhöhe, Kontrolle des Verschlusses), Kontrolle zur Qualitätssicherung des Behältnisses und/oder des Abfüllprozesses und/oder Verschließ- und/oder Verpackungsprozesses, eine Messeinrichtung, eine Inspektionseinrichtung, eine Kamera, eine Sensoreinrichtung (insbesondere zur Aufnahme von Prozess- und/oder Umweltparameter) oder auch ein Thermometer und/oder Luftdruckgerät handeln.

Dabei weist die die Anlage bevorzugt wenigstens eine Erfassungseinrichtung zum Erfassen eines Identifikationsmittels der Behältnisse auf, mittels welchem die Behältnisse jeweils eindeutig identifizierbar sind.

Erfindungsgemäß weist die Anlage eine Kommunikationseinrichtung auf, welche dazu konfiguriert ist, wenigstens zeitweise eine Kommunikationsverbindung mit wenigstens einer, insbesondere Cloud-basierten, Speichereinrichtung herzustellen. Bevorzugt ist die Speichereinrichtung (wenigstens abschnittsweise) wenigstens zeitweise über ein öffentliches Netzwerk mit der Anlage zur Datenkommunikation verbunden oder verbindbar. Erfindungsgemäß ist in der Speichereinrichtung ein dem Identifikationsmittel eindeutig zuordenbarer Identifikator abgelegt und/oder ablegbar. Dabei ist die Behandlungsvorrichtung (und insbesondere eine Vielzahl von Behandlungsvorrichtungen der Anlage jeweils) dazu konfiguriert, geeignet und bestimmt, der Kommunikationseinrichtung den wenigstens einen Datenwert zur, insbesondere wenigstens mittelbaren und/oder zur direkten, Übermittlung an die Speichereinrichtung bereitzustellen und/oder bevorzugt zur Ablegung in der Speichereinrichtung bereitzustellen.

Bevorzugt ist die Anlage dazu geeignet und bestimmt ist, eine Zuordnung zwischen dem Datenwert (oder hierfür charakteristische Daten) und dem jeweiligen Identifikator herzustellen.

Es wird also auch im Rahmen der erfindungsgemäßen Anlage vorgeschlagen, dass die von einer und bevorzugt von einer Vielzahl an Datenwerten, welche von einer Behandlungsvorrichtung und bevorzugt von einer Vielzahl von Behandlungsvorrichtungen erhoben werden, auf einer Speichereinrichtung abgelegt werden und/oder abgelegt sind, welche beispielsweise Cloud-basiert ist und/oder wenigstens bereichsweise außerhalb eines firmeninternen Netzwerks angeordnet ist. Dabei werden die Datenwerte jeweils in einer Form abgelegt, die eine Zuordnung bzw. eine Zuordenbarkeit zu einem Identifikator (des zugehörigen Behältnisses) erlaubt. Bevorzugt ist wenigstens eine Speichereinrichtung zumindest bereichsweise nicht unmittelbar in ein firmeninternes Netzwerk eingebunden. Bevorzugt kann auf wenigstens einen Bereich der Speichereinrichtung nicht ausschließlich über ein firmeninternes Netzwerk zugegriffen werden, sondern eine Kommunikationsverbindung ist ausschließlich (wenigstens bereichsweise) über ein öffentliches Netz wie das Internet möglich. Bevorzugt handelt es sich um eine externe Speichereinrichtung, welche sich bevorzugt außerhalb der (jeweiligen) Behandlungsvorrichtung und besonders bevorzugt außerhalb der Anlage befindet.

Dabei kann die Anlage mit allen obig in Bezug auf das Verfahren zum Betrieb einer Anlage beschriebenen Merkmalen einzeln oder in Kombination aus mehreren Merkmalen ausgestattet sein. Bevorzugt ist die Anlage dazu eingerichtet, geeignet und/oder bestimmt, das obig beschriebene Verfahren zum Betrieb einer Anlage (insbesondere auch entsprechend jeder als bevorzugt beschriebenen Ausführungsform) sowie alle bereits obig im Zusammenhang mit dem Verfahren beschriebene Verfahrensschritte einzeln oder in Kombination miteinander auszuführen. Umgekehrt kann das Verfahren mit allen im Rahmen der Anlage beschriebenen Merkmale einzeln oder in Kombination miteinander ausgestattet sein.

Mit der Verwendung (wenigstens) einer Cloud-basierten Speichereinrichtung wird eine Speichereinrichtung vorgeschlagen, welche bevorzugt eine Vielzahl (miteinander in Kommunikationsverbindung stehende) Server aufweist. Dies bietet den Vorteil, dass die Speichereinrichtung, insbesondere durch die Elastizität einer Cloud, skalierbar ist und eine Speicherkapazität hierdurch in vergleichsweise einfacher Weise erweiterbar ist. Bei Bedarf könnte auf große Kapazitäten zurückgegriffen werden. Dies ist insbesondere vorteilhaft, wenn möglichst viele, und insbesondere im Wesentlichen alle, Behandlungsvorrichtungen, die ein Behältnis und besonders bevorzugt die alle Behältnisse einer Anlage und/oder eines Produzenten, während der Herstellung und/oder (Weiter-)Behandlung und/oder Weiterverhandlung behandeln, mittels einer Datenerhebungseinrichtung insbesondere eine Vielzahl von Datenwerten erheben und diese zur Übermittlung an die Speichereinrichtung bereitgestellt werden (und die dort abgelegten, einem Identifikator zugeordneten Datenwerte im Wesentlichen dauerhaft (insbesondere zumindest während der gesamten Lebensdauer des Behältnisses) abrufbar bleiben sollen).

Bevorzugt weist die Anlage wenigstens zwei und bevorzugt eine Vielzahl insbesondere verschiedener Behandlungsvorrichtungen auf, welche dasselbe Behältnis (welches mithilfe des Identifikatormittels eindeutig identifizierbar ist) behandeln, und welche an verschiedenen, voneinander beabstandeten Orten und insbesondere nicht auf demselben Firmengelände angeordnet sind. Bevorzugt kann jede dieser Behandlungsvorrichtungen auf die wenigstens eine (gemeinsame) Speichereinrichtung zugreifen und insbesondere Datenwerte in einer darauf abgelegten (insbesondere Cloud-)Datenbank ablegen und/oder abfragen.

Bevorzugt weist die Anlage zwei, insbesondere jeweils Cloud-basierte, Speichereinrichtungen auf. Bevorzugt sind diese beiden Speichereinrichtungen unabhängig voneinander. Bevorzugt unterscheiden sich diese beiden Speichereinrichtungen in einer Zugriffsberechtigung, insbesondere für externe Dritte, und/oder der Art der Datenwerte, welche abgelegt werden. Bevorzugt weist die Anlage und/oder eine Behandlungsvorrichtung wenigstens je eine separate Kommunikationseinrichtungen für jeweils eine dieser Speichereinrichtungen auf, wobei die Kommunikationseinrichtung zumindest abschnittsweise eine Datenübertragung basierend auf einem voneinander verschiedenen Protokoll und/oder ein voneinander verschiedenes Verschlüsselungssystem (zur unterschiedlich schwach oder starken Datenverschlüsselung) nutzen..

Bevorzugt ist eine, insbesondere Cloud-basierte, Speichereinrichtung dazu vorgesehen, dass Anlagenbetreiber-seitige Daten hierauf abgelegt sind und/oder ablegbar sind, welche insbesondere nicht mit Dritten geteilt werden sollen. Bevorzugt ist ausschließlich dem Anlagenbetreiber Zugriff auf diese Speichereinrichtung, jedoch Dritten kein Zugriff auf diese Speichereinrichtung möglich bzw. gestattet. Bevorzugt kann es sich bei den Anlagenbetreiber-seitigen Daten um Daten handeln, welche charakteristisch sind für eine Linie und/oder die Anlage und/oder ein Betreiben der Anlage und/oder einzelne Komponenten hiervon. So können etwa in dieser Speichereinrichtung einige und bevorzugt alle relevanten Daten für die Steuerung und/oder den Betrieb der Anlage gespeichert sein.

Bevorzugt ist die zweite, insbesondere Cloud-basierte, Speichereinrichtung, derart, insbesondere als sogenannte allgemeine Speichereinrichtung, konfiguriert, dass im Unterschied zur im vorhergehenden Absatz ausgeführten Anlagenbetreiber-seitigen Speichereinrichtung, auch Dritte auf die sogenannte allgemeine Speichereinrichtung zugreifen können. Bevorzugt sind in dieser Speichereinrichtung lediglich ein Teil der Daten der Anlagenbetreiber-seitigen Speichereinrichtung abgelegt. Bevorzugt sind beispielsweise hierauf nur elementare Daten wie beispielsweise wann produziert, welcher Inhalt und dergleichen (produkt- und/oder Behältnis-spezifische Informationen), abgelegt. Bevorzugt werden diese Daten von der Anlagenbetreiber-seitigen Speichereinrichtung auf diese (zweite bzw. sogenannte allgemeine) Speichereinrichtung übertragen. Bevorzugt sind auf der zweiten bzw. der allgemeinen Speichereinrichtung keine (insbesondere Anlagenbetreiber-interne) Daten zur Steuerung und/oder zum Betrieb der Anlage abgelegt.

Das Vorsehen dieser zwei Clouds bzw. dieser zwei Cloud-basierten Speichereinrichtungen bietet den Vorteil, dass jede beteiligte Partei nur die Daten sieht bzw. abrufen kann, die auch notwendig sind.

Es könnte sein, dass es sich bei der ersten Cloud-basierten Speichereinrichtung um eine rein firmeninterne (und/oder Anlagenbetreiber-interne) Speichereinrichtung handelt, welche derart konfiguriert ist, dass lediglich der Anlagenbetreiber beispielsweise einer Behältnisherstellungsvorrichtung und/oder ein Anlagenhersteller eine Zugriffsberechtigung hat. Die zweite Cloud-basierte Speichereinrichtung könnte derart konfiguriert sein, dass auch ein externer Dritter, wie beispielsweise ein Endverbraucher und/oder ein Händler eine Zugriffsberechtigung auf zumindest Bereiche der Speichereinrichtung hat.

Zusätzlich oder alternativ könnte es auch sein, dass (ausschließlich) auf der ersten Speichereinrichtung Datenwerte abgelegt werden, bei denen es sich etwa um Prozessdaten handelt, beispielsweise in Bezug auf wenigstens eine Behandlungsvorrichtung und bevorzugt in Bezug auf eine Vielzahl von Behandlungsvorrichtungen, welche das Behältnis vor der Auslieferung des Behältnisses und/oder des mit einem Produkt befüllten Behältnisses behandeln. Bevorzugt sind in der zweiten Speichereinrichtung Datenwerte in Bezug auf die Art und/oder Größe des Behältnisses und/oder Füllgut, bevorzugt nicht aber Prozessdaten zur Herstellung des Behältnisses abgelegt.

Bevorzugt weist die Behandlungsvorrichtung und besonders bevorzugt weist eine Vielzahl von Behandlungsvorrichtungen (jeweils) eine Kommunikationsschnittstelle auf, über welche über die Kommunikationseinrichtung zumindest zeitweise eine, insbesondere echtzeitfähige und/oder direkte, Kommunikationsverbindung mit der Speichereinrichtung und insbesondere mit den beiden (Cloud-basierten) Speichereinrichtung herstellbar ist.

Bei der Kommunikationseinrichtung handelt es sich insbesondere um ein drahtgebundenes und/oder drahtloses Netzwerk.

In einer vorteilhaften Ausführungsform weist die Behandlungsvorrichtung und bevorzugt jede Behandlungsvorrichtung eine Maschinensteuerungseinrichtung bzw. eine Maschinensteuerung (SPS) und/oder eine Mensch-Maschinen-Schnittstelle (HMI, Human Machine Interface) auf. Bevorzugt erfolgt eine Kommunikation zwischen jeder Behandlungsvorrichtung und der Speichereinrichtung (insbesondere mittelbar) über eine Datenübermittlungseinrichtung, welche insbesondere die an die Speichereinrichtung zu übermittelnden Datenwerte mehrerer Behandlungsvorrichtungen sammelt und bevorzugt erst dann die Datenwerte an die Speichereinrichtung übermittelt. Bevorzugt weist die Anlage lediglich eine Datenübermittlungseinrichtung auf. Bevorzugt ist (jeweils) eine Maschinensteuerungseinrichtung einer ersten Behandlungsvorrichtung (ausschließlich) mit derjenigen der in Transportrichtung des Behältnisses gesehen nächstfolgenden Behandlungsvorrichtung zur Datenkommunikation und zur Bereitstellung und/oder Übermittlung der erhobenen Datenwerte an die Speichereinrichtung verbunden.

Bevorzugt ist in Transportrichtung gesehen stromaufwärts (insbesondere unmittelbar) vor der Datenübermittlungseinrichtung eine Erfassungseinrichtung zur Erfassung des Identifikationsmittels eines Behältnisses angeordnet.

Bevorzugt tauschen diese Erfassungseinrichtung und die Datenübermittlungseinrichtung Daten in Bezug auf an die Speichereinrichtung zu übermittelnde Datenwerte und/oder in Bezug auf ein erfasstes Identifikationsmittel aus.

In einer vorteilhaften Ausführungsform ist eine Datenübermittlungseinrichtung vorgesehen, welche die an die Speichereinrichtung zu übermittelnden Datenwerte wenigstens zweier Behandlungsvorrichtungen insbesondere zeitgleich an die Speichereinrichtung übermittelt und insbesondere die zu übermittelnden Datenwerte hierfür zuvor sammelt und/oder temporär in einer Speichereinrichtung ablegt.

Bevorzugt ist die Kommunikationseinrichtung zur echtzeitfähigen Verarbeitung und/oder Übermittlung der von einer (insbesondere jeder) Behandlungsvorrichtung bereitgestellten Datenwerte geeignet und bestimmt.

In einer vorteilhaften Ausführungsform weist die Kommunikationseinrichtung (wenigstens und insbesondere genau) eine Integrationsschicht auf, wobei eine Kommunikationsverbindung zwischen der (Kommunikationsschnittstelle der) Behandlungsvorrichtung (und bevorzugt zwischen jeder Kommunikationsschnittstelle der Vielzahl an Behandlungsvorrichtungen) und der Speichereinrichtung und bevorzugt den beiden Speichereinrichtungen, insbesondere zur Übermittlung (zum Ablegen) und/oder zur Abfrage von Datenwerten, ausschließlich über die Integrationsschicht herstellbar ist.

Bevorzugt handelt es sich bei der Integrationsschicht um eine Zwischenschicht einer Architektur eines Softwaresystems der Anlage (welches insbesondere entsprechend einer Schichtenarchitektur strukturiert ist), in welche die (Softwarekomponente der) Kommunikationseinrichtung (wenigstens abschnittsweise und bevorzugt vollständig) strukturiert ist.

Bevorzugt kann eine erste Zwischenschicht (eines Softwaresystems der Anlage und/oder der Kommunikationseinrichtung) schon aufgrund der Behandlungsmaschine bzw. der Behandlungsvorrichtung notwendig sein kann. Beispielsweise kann im Falle einer Füllmaschine (als Behandlungsmaschine bzw. Behandlungsvorrichtung) ein Codeleser im Maschinenauslauf installiert sein, der die eintreffende Flasche registriert und bevorzugt an diesem Punkt von der Füllmaschine mitgeteilt bekommt, mit welchem Füllorgan, Verschließorgan, Produkt die Flasche behandelt wurde. Dies bietet den Vorteil, dass etwa für eine Füllmaschine mit 120 Füllventilen nicht ebenso viele, also hier 120 Identifikationselemente erforderlich sind. Ebenso verhält es sich bei einem Verschließer als Behandlungsvorrichtung.

Diese Identifizierungseinrichtung (Codeleser), etwa dieser eine z. B. 2-D Codeleser, kann dabei vor der Behandlungsmaschine bzw. vor der Behandlungsvorrichtung oder auch danach angeordnet sein. Das Aggregieren der Daten wird so lange funktionieren, als die Behälterposition zuordenbar ist, also auch im einbahnigen Bereich auf dem Transporteur, wobei bevorzugt das Aggregieren innerhalb einer fest zuordenbaren Position (Sterntasche) ist. Im Falle einer Sensoranordnung im Einlauf weiß die Maschinensteuerung, welche Behandlungsorgane den Behälter behandeln werden, und im Auslauf ist der Steuerung bekannt, welches Organ den Behälter behandelt hat.

Bevorzugt ist ein (bzw. das) Softwaresystem der Anlage und insbesondere der Behandlungsvorrichtung derart (insbesondere im Rahmen einer Schichtenarchitektur) konfiguriert und/oder strukturiert, dass es wenigstens eine (erste) Zwischenschicht aufweist. Bevorzugt ist diese erste Zwischenschicht der (bzw. wenigstens einer) Behandlungsvorrichtung zugeordnet. Bevorzugt kann die Behandlungsvorrichtung über diese (erste) Zwischenschicht intern, d. h. innerhalb der Behandlungsvorrichtung, Daten austauschen. Insbesondere kann eine Datenerfassungseinrichtung der Behandlungsvorrichtung (insbesondere auch ausschließlich, ohne Datenaustausch mit einer Cloud-basierten Speichereinrichtung) über die Zwischenschicht Daten an eine von der Datenerfassungseinrichtung verschiedene Datenverarbeitungseinrichtung der Behandlungsvorrichtung, wie etwa der Individualisierungseinrichtung, übermitteln. Bei dieser (ersten) Zwischenschicht kann es sich um die (obig genannte) Integrationsschicht handeln. Bevorzugt kann also die (und besonders bevorzugt eine jede) Behandlungsvorrichtung der Anlage die Integrationsschicht (auch) zum (auch rein) internen Datenaustausch nutzen.

Bevorzugt weist die Kommunikationseinrichtung einen, insbesondere drahtgebundenen, (Kommunikations-)Bus auf, über welchen Daten übermittelbar sind. Bevorzugt erfolgt eine Kommunikation der Behandlungsvorrichtung und insbesondere jeder Behandlungsvorrichtung mit der Speichereinrichtung über den Kommunikationsbus.

Mit anderen Worten adressiert die und insbesondere jede Behandlungsvorrichtung zur Kommunikation mit der Speichereinrichtung den (Kommunikations-)Bus.

Bevorzugt ist die Individualisierungseinrichtung dazu geeignet und bestimmt, über eine Anwendung, insbesondere eine ID Generator Anwendung, welche mit dem Kommunikationsbus zur Bereitstellung eines - insbesondere eindeutigen - Identifikators kommuniziert, einen Identifikator für ein mit einem Identifikatormittel zu versehendes Behältnis anzufragen und zu empfangen. Bevorzugt kommuniziert der Kommunikationsbus, insbesondere unmittelbar, mit einer Identifikator-Erzeugungseinrichtung und/oder (insbesondere mittelbar) mit einem ID Pool, zur Abfrage und/oder zur Bereitstellung eines Identifikators.

Bevorzugt greift die Identifikator-Erzeugungseinrichtung und/oder ein ID Pool auf Ressourcen, wie einer Prozessorleistung oder einem Speicherplatz) wenigstens einer Speichereinrichtung, insbesondere zur bzw. während der Erzeugung und/oder Abfrage eines Identifikators zu.

Alternativ oder zusätzlich kann aber die Identifikator-Erzeugungseinrichtung und/oder der ID-Pool eine eigene und von der, insbesondere Cloud-basierten, Speichereinrichtung unabhängige Speichereinrichtung und/oder Prozessor aufweisen, welche zur Erzeugung und/oder Abfrage eines Identifikators verwendet werden. Bevorzugt kann eine solche Identifikator-Erzeugungseinrichtung firmenintern und insbesondere in demselben Gebäude wie wenigstens ein Teil und bevorzugt die gesamte Anlage angeordnet sein.

Bevorzugt ist die Behandlungsvorrichtung dazu geeignet und bestimmt, über die Kommunikationseinrichtung, insbesondere in Bezug auf ein vorgegebenes (zu behandelndes) Behältnis (welches bevorzugt mittels des Identifikationsmittels identifizierbar ist), Datenwerte von der wenigstens einen (und bevorzugt auch von der zweiten) Speichereinrichtung abzufragen und/oder zur Ablegung dieser Datenwerte zu übermitteln. Insbesondere kann von einer Behandlungsvorrichtung und bevorzugt von jeder Behandlungsvorrichtung eine Statusabfrage in Bezug auf ein zu behandelndes Behältnis gestellt werden.

Bevorzugt ist die Behandlungsvorrichtung und insbesondere ist jede Behandlungsvorrichtung dazu geeignet und bestimmt, Daten in Bezug auf ein zu behandelndes Behältnis, welche von der Kommunikationseinrichtung von der Speichereinrichtung übermittelt werden, zu empfangen, bevorzugt in einem internen Speicher der Behandlungsvorrichtung abzulegen und besonders bevorzugt eine Änderung wenigstens einer Einstellung und/oder Größe und/oder wenigstens eines Prozessparameters (insbesondere in Bezug auf die, insbesondere individualisierte, Behandlung des zu behandelnden Behältnisses) vorzunehmen.

Denkbar ist, dass das Identifikationsmittel über ein, insbesondere mobiles, Endgerät, wie etwa ein Smartphone, Tablet, Laptop oder dergleichen, auslesbar ist und mittels des Endgeräts in der Speichereinrichtung in Bezug auf dieses Behältnis und insbesondere in Bezug auf den diesem Behältnis zugeordneten Identifikator, abgelegte Datenwerte abgefragt werden können. Dies kann vorteilhaft dazu verwendet werden, dass sich ein Endkonsument beispielsweise von der Produktquelle und/oder Herstellungsort und/oder Abfüllort und/oder einem Vertriebsweg überzeugen kann.

In einer vorteilhaften Ausführungsform ist die Behandlungsvorrichtung ausgewählt aus einer Gruppe, die eine Erwärmungsvorrichtung zum Erwärmen eines Vorformlings, eine Umformvorrichtung zum Umformen eines Kunststoffvorformlings zu einer Kunststoffflasche, eine Sterilisationsvorrichtung zur Sterilisierung eines Behältnisses, insbesondere eines Kunststoffvorformlings, eine Herstellungsvorrichtung zur Herstellung einer Glasflasche, eine Füllvorrichtung zum Befüllen eines Behältnisses mit einem Produkt, eine Inspektionseinrichtung um Inspizieren eines Kunststoffvorformlings oder einer Flasche, eine Etikettiervorrichtung zum Etikettieren eines Behältnisses, eine Verschließvorrichtung zum Verschließen eines, insbesondere befüllten, Behältnisses, eine Kontrolleinrichtung, eine Verpackungseinrichtung, eine Direktdruckeinrichtung zum Bedrucken eines Behältnisses, eine Zusammenstellungsvorrichtung zum Zusammenstellen einer Vielzahl von Behältnissen zu einer Zusammenstellen, eine Zerstörvorrichtung zum Zerstören des Behältnisses und dergleichen umfasst.

In einer vorteilhaften Ausführungsform weist die Anlage wenigstens eine weitere Behandlungsvorrichtung und bevorzugt eine Vielzahl weiterer Behandlungsvorrichtungen auf.

In einer vorteilhaften Ausführungsform handelt es sich bei der Behandlungsvorrichtung um eine Weiterverarbeitungsvorrichtung, welche zur Behandlung eines Behältnisses nach deren Auslieferung (insbesondere in bereits befülltem Zustand) geeignet und bestimmt ist. Es könnte sich beispielsweise um eine Behandlungsvorrichtung (etwa eine Transportvorrichtung) am Point of Sale oder um eine Recyclingvorrichtung handeln.

Die vorliegende Erfindung ist weiterhin gerichtet auf ein System aus einer Anlage gemäß einer der obig beschriebenen Ausführungsform und der wenigstens einen über das Internet zugreifbaren und/oder Cloud-basierten, obig im Rahmen der Anlage beschriebene Speichereinrichtung. Dabei kann die Anlage und die Speichereinrichtung jeweils mit allen obig im Zusammenhang mit dem Verfahren oder der Anlage beschriebenen Merkmalen einzeln oder in Kombination ausgestattet sein.

Bevorzugt ist ein Prozessor vorgesehen, mithilfe dem die in der Speichereinrichtung abgelegten Datenwerte auswertbar und insbesondere eine Analyse und/oder Aktualisierung und/oder ein Update der Datenbank vorgenommen werden kann. Beispielsweise kann einem vorgegebenen Identifikator wenigstens ein weiterer diesem Identifikator zugeordneten Datenwert hinzugefügt werden.

Bevorzugt ist der Prozessor der Speichereinrichtung dazu geeignet und bestimmt, eine Autorisierung und/oder Authentifizierung eines Clients (etwa eines mobilen Endgeräts oder einer Behandlungsvorrichtung) in Bezug auf eine Datenübermittlung zwischen dem Client und der Speichereinrichtung, wie eine Abfrage eines Datenwerts und/oder eine Übermittlung eines Datenwerts (bezüglich eines vorgegebenen Identifikator), vorzunehmen.

Die vorliegende Erfindung ist weiterhin gerichtet auf ein Verfahren zur insbesondere eindeutigen Rückverfolgung und/oder Nachverfolgung und/oder Identifizierung eines Kunststoffbehältnisses, welches die Herstellung des Kunststoffbehältnisses aus einem Kunststoffvorformling umfasst. Bevorzugt wird der Kunststoffvorformling durch Beaufschlagung eines fluiden Mediums (etwa Blasluft und/oder einer Flüssigkeit wie dem abzufüllenden Produkt) zu dem Kunststoffbehältnis (innerhalb einer Blasformeinrichtung) expandiert.

Erfindungsgemäß umfasst dieses Verfahren einen Schritt, in welchem der Kunststoffvorformling mittels Anordnen und/oder Einbringen und/oder Erzeugen eines Identifikationsmittels individualisiert wird, wobei das Identifikationsmittel während der Expansion des Kunststoffvorformlings zu dem Kunststoffbehältnis wenigstens bereichsweise expandiert wird und/oder wenigstens eine geometrische Ausdehnung in wenigstens eine Richtung und besonders bevorzugt in wenigstens zwei Richtung ändert und insbesondere vergrößert. Bevorzugt handelt es sich bei dem Identifikationsmittel um einen (insbesondere aufgedruckten) QR-Code.

Bevorzugt wird diesem Identifikationsmittel genau ein Identifikator zugeordnet. Denkbar ist aber auch, dass umgekehrt die Individualisierung des Kunststoffvorformlings mittels des Identifikationsmittels auf Grundlage eines erzeugten Identifikators erfolgt.

Bevorzugt wird ein derart hergestelltes Behältnis zur Bereitstellung wenigstens eines Datenwerts in Bezug auf das Behältnis und/oder zur dessen Identifikationsmittels und/oder des zugeordneten Identifikators verwendet. Dabei kann das Verfahren mit allen obig im Zusammenhang mit dem Betrieb der Anlage beschriebenen Schritten und Merkmalen ausgestattet sein.

Die vorliegende Erfindung einer Anlage und das Verfahren zum Betrieb einer Anlage wurde in Bezug auf die Behandlung von Behältnissen und Flaschen beschrieben. Die vorliegende Erfindung ist allerdings übertragbar auf Anlagen mit Behandlungsvorrichtung zum Behandeln von Verbrauchsprodukten. Die Anmelderin behält sich vor, einen Anspruch auf eine solche Anlage und ein Verfahren zum Betrieb einer solchen zu richten.

Weitere Vorteile und Ausführungsformen ergeben sich aus den beigefügten Zeichnungen: Darin zeigen:
- Fig. 1: eine schematische Darstellung einer erfindungsgemäßen Anlage zum Behandeln von Behältnissen gemäß einer ersten Ausführungsform; und
- Fig. 2: eine schematische Darstellung einer erfindungsgemäßen Anlage zum Behandeln von Behältnissen gemäß einer zweiten Ausführungsform.

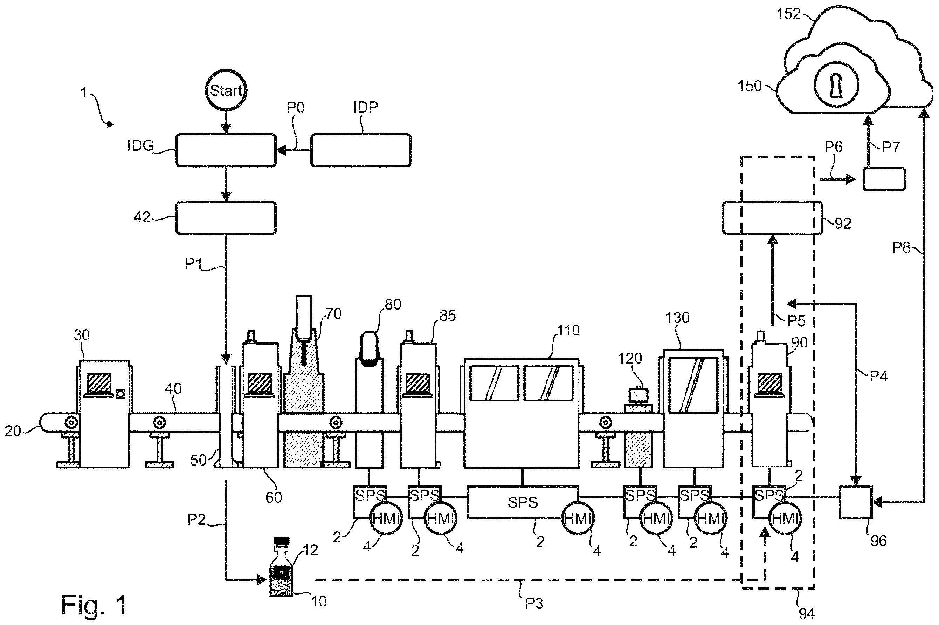

Fig. 1 zeigt eine schematische Darstellung einer erfindungsgemäßen Anlage 1 zum Behandeln von Behältnissen 10 gemäß einer ersten Ausführungsform und beschreibt den technischen Ablauf zur Individualisierung eines Behältnisses durch Markierung dieses Behältnisses, hier einer Flasche.

Das Bezugszeichen IDG kennzeichnet einen ID Generator, welcher als Identifikator-Erzeugungseinrichtung, für das Bereitstellen eindeutiger Identifikatoren (IDs) verantwortlich ist. Es existiert eine Vielzahl von Verfahren und Lösungen für das Erzeugen (und auch Aufbringen) von Identifikatoren bzw. IDs.

Der ID Generator IDG ist (hier) ein Skript, das direkt auf der Individualisierungseinrichtung, hier ausgebildet als Druckeinrichtung 50, der ID Printer Unit, installiert wird oder auf einem externen System läuft. Es muss mindestens eine (Kommunikations-)Verbindung zwischen der ID Printer Unit (dt. ID-Druckeinheit) bzw. der Individualisierungseinrichtung als Hardware und der Identifikator-Erzeugungseinrichtung, hier dem ID Generator IDG, als Software oder Softwareservice bestehen.

Das Bezugszeichen IDP kennzeichnet einen ID Pool (bzw. Identifikator-Pool), welcher hier dem ID Generator (allgemein der Identifikator-Erzeugungseinrichtung) eine Ansammlung (Pool) an Identifikatoren (IDs) zur Verfügung stellt (gekennzeichnet durch Pfeil P0). Die IDs unterliegen einem Algorithmus und Regeln, so dass durch Codierung von der ID auf beispielsweise das Produktionsdatum geschlossen werden kann. Jede ID ist eindeutig.

Das Generieren von IDs ist in Fig. 1 durch das Bezugszeichen 42 gekennzeichnet. Die ID wird hier nach der Generierung an die Individualisierungseinrichtung, hier die ID Printer Unit 50, über eine Schnittstelle kommuniziert. Der Pfeil P1 kennzeichnet dabei den Verfahrensschritt, in welchem die ID (bzw. ein diesem Identifikator zugeordnetes Identifikationsmittel) auf dem Behältnis, hier einer Flasche, aufgebracht wird. Die Individualisierungseinrichtung, hier die ID Printer Unit, ist für die Aufbringung der ID (bzw. ein diesem Identifikator zugeordnetes Identifikationsmittel) auf die Flasche zuständig. Das Bezugszeichen 12 kennzeichnet dabei ein Identifikationsmittel, welches an der Flasche 12 angeordnet ist. Dabei handelt es sich beispielsweise um einen (aufgedruckten) QR-Code.

In der in Fig. 1 gezeigten Ausführungsform wird ein Kunststoffvorformling bereitgestellt und von der Transporteinrichtung 20 einer Erwärmungsvorrichtung 30 (sogenannter "Preform Heater") zugeführt, in dieser erwärmt und im Anschluss in einer Blasformvorrichtung, deren Anordnung innerhalb der Anlage 1 durch das Bezugszeichen 40 gekennzeichnet ist, zu einer (Kunststoff-)Flasche 10 expandiert. Diese Flasche 10 wird durch die Individualisierungseinrichtung, hier der Druckeinrichtung 50, mit einem Identifikationsmittel 12 versehen (gekennzeichnet durch den Pfeil P2), wodurch eine Flasche, welche ein Identifikationsmittel 12 aufweist, entsteht.

Die Flasche 10 beginnt ihre Reise durch die Linie (der Anlage 1). Hierzu kann die Flasche 10 von wenigstens einer Transporteinrichtung 20 von einer Behandlungsvorrichtung zur nächsten, sowie auch innerhalb der Behandlungsvorrichtung(en) transportiert werden. Dargestellt sind hier als Behandlungsvorrichtungen (in einer Reihenfolge stromabwärts der Transportrichtung der Flasche) eine Inspektionsvorrichtung 60, eine Füllvorrichtung 70 zum Befüllen der Flasche 10 mit einem Produkt, eine Verschließvorrichtung 80, eine Trocknungsvorrichtung 110, eine Etikettiervorrichtung 120 sowie eine Verpackungseinrichtung 130 zum Verpacken der Flasche 10.

Das Bezugszeichen 2 kennzeichnet dabei jeweils eine SPS (Maschinensteuerung) einer Behandlungsvorrichtung und das Bezugszeichen 4 eine Mensch-Maschinen-Schnittstelle (sogenannte "HMI", Human Machine Interface").

Die Bezugszeichen 85, 90 kennzeichnen jeweils eine Kontrolleinrichtung (etwa am Ende der Linie und zwischen der Verschließeinrichtung 80 und der Trocknungseinrichtung 110 angeordnet), welche beispielsweise eine Füllhöhe in der Flasche und/oder eine ordnungsgemäße Anordnung des Verschlusses auf der Flasche 10 und/oder einen Sicherungsring und/oder eine ordnungsgemäße Etikettierung und/oder Verpackung der Flasche 10 oder weitere Produktionsdaten überprüft. Diese Kontrolleinrichtungen 90 (hier ein sogenannter "Checkmat") in einer Linie bzw. in einer Anlage 1 dienen als Meilensteine und lesen bevorzugt die IDs bzw. erfassen die Identifikationsmittel der Behältnisse. So ist bekannt, wo sich die Flasche gerade befindet.

Außerdem soll jede Maschine bzw. jede Behandlungsvorrichtung 60, 70, 80, 85, 110, 120, 130, 90 der Anlage 1 Daten zu einer ID bzw. zu einem Identifikationsmittel einer Flasche anreichern können.

In einer Ausführungsform ist eine Datenübermittlungseinrichtung 96, das sogenannte "Ready Kit" für die Aggregation der Daten (welche insbesondere von mehreren Behandlungsvorrichtungen, z. B. Checkmat 85, 90, einer Verschließeinrichtung 80 ("Capper") und/oder einer Trocknungseinrichtung 110 ("Dryer") und/oder einer Etikettiereinrichtung 120 ("Labeler") und/oder einer Verpackungseinrichtung 130 ("Packaging"), erhoben werden, zuständig. Daher stehen die erhobenen Daten einer Anlage 1 in dieser Ausführungsform frühestens in der Datenübermittlungseinrichtung (hier im Ready-Kit) zur Verfügung. Die Datenübermittlungseinrichtung 96 (das Ready Kit) gibt die Daten weiter an eine Cloud 150. In dieser Ausführungsform ist bevorzugt eine Erfassungseinrichtung 94 zur Identifizierung einer Flasche ("Bottle Identifier") vorhanden, welche bevorzugt das Identifikationsmittel 12 erfasst bzw. hierdurch die ID liest (gekennzeichnet durch das Bezugszeichen 92, Pfeil P5). In dieser Ausführungsform kann die Erfassungseinrichtung eine (Kommunikations-)Verbindung zur Datenübermittlungseinrichtung 96 aufbauen (siehe Pfeil P4), über welche die von der Datenübermittlungseinrichtung 96 aggregierten Daten an die Erfassungseinrichtung übermittelt werden kann, welche wiederum in der hier gezeigten Ausführungsform diese Daten über das erfasste Identifikationsmittel 12 einem Identifikator zuordnen kann und die Daten zusammen mit dem zugehörigen Identifikator oder einer hierfür charakteristischen Größe hier in eine Cloud 150 als Speichereinrichtung schreibt (verdeutlicht durch die Pfeile P6 und P7).

Möglich ist dabei, dass zwei insbesondere voneinander (wenigstens teilweise und bevorzugt vollständig) getrennte Speichereinrichtungen 150 und 152 vorhanden sind, welche jeweils etwa als Cloud bereitgestellt werden können. Dabei kann eine Datenkommunikationsverbindung zwischen diesen beiden Clouds bestehen. Eine der beiden Speichereinrichtungen kann beispielsweise eine firmeninterne Speichereinrichtung sein, während bevorzugt eine der Speichereinrichtungen (nur) über ein öffentliches Netzwerk (wenigstens teilweise außerhalb des firmeninternen Netzwerks) zugänglich ist.

Bei den beiden (insbesondere Cloud-basierten) Speichereinrichtungen 150 und 152 kann es sich um nach außen geschlossene Systeme handeln. Bevorzugt ist eine Datenkommunikationsverbindung zum Austausch von Daten und/oder Nachrichten zwischen diesen beiden Speichereinrichtungen 150 und 152 eingerichtet ("Bridged MQTT Broker), welche einen Datenaustausch basierend auf dem Protokoll MQTT unterstützt.

Der Pfeil P8 kennzeichnet eine Kommunikationsverbindung zwischen der Datenübermittlungseinrichtung 96 (dem Ready-Kit) und der Speichereinrichtung 152, bei der es sich hier um eine Cloud-basierte Speichereinrichtung handelt (sogenannte "Krones PET-Cloud"). Bevorzugt erfolgt die Kommunikation zwischen der Datenübermittlungseinrichtung 96 und der Cloud-basierten Speichereinrichtung ("Syskron Cloud") basierend auf dem Protokoll MQTT.

Weiterhin bevorzugt in der hier beschriebenen Ausführungsform ist eine Kommunikationsverbindung zwischen der Erfassungseinrichtung 94 ("Bottle Identifier") und der Datenübermittlungseinrichtung 96 eingerichtet, welche besonders bevorzugt eine Kommunikation basierend auf dem Protokoll MQTT unterstützt und/oder dazu eingerichtet ist. So ist es möglich, dass die Erfassungseinrichtung 94 ("Bottle Identifier") die gesendeten Daten jeder Maschine bzw. jeder Behandlungsvorrichtung bereitgestellt bekommt. Anschließend aggregiert die Erfassungseinrichtung 94 ("Bottle Identifier"), bei welcher sich die Flasche gerade befindet, die Daten (der Behandlungsvorrichtungen) und schreibt sie in die Speichereinrichtung 152 ("Krones PET Cloud").

Eine insbesondere auf dem MQTT-Protokoll basierende (Kommunikations-)Verbindung P8 zwischen der Datenübermittlungseinrichtung 96 und der Speichereinrichtung 152 ("Krones PET Cloud" ermöglicht bevorzugt die Synchronisation der Daten. Davon abzuleitende Maßnahmen, z. B. das Umsteuern einer Flasche, kann von der Speichereinrichtung 152 ("Krones PET Cloud") beauftrag, an die Datenübermittlungseinrichtung 96 kommuniziert und durch die Maschinensteuerung umgesetzt werden.

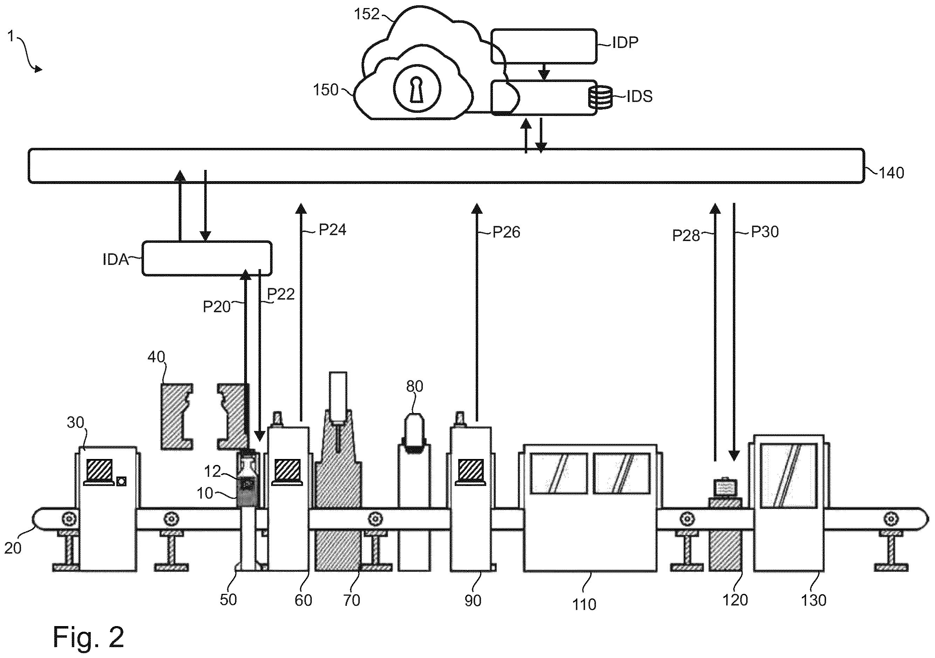

Fig. 2 zeigt eine schematische Darstellung einer erfindungsgemäßen Anlage 1 zum Behandeln von Behältnissen gemäß einer ersten Ausführungsform. Dabei kennzeichnen (wechselseitig) gleiche Bezugszeichen gleichwirkende Einrichtungen oder Elemente.

Anders als in Figur 1 ist in der in Fig. 2 dargestellten Ausführungsform eine Kommunikationseinrichtung 140 vorgesehen, welche ein gemeinsames Bussystem bzw. einen gemeinsamen Bus zur Datenkommunikation für alle Behandlungsvorrichtungen sowie Erfassungseinrichtungen aufweist. Der gemeinsame Bus dient als Integrationsschicht ("Integration Layer") zwischen der Speichereinrichtung 152 ("Krones PET Cloud") und der insbesondere digital angebundenen Sensorik (Cyber Physical Systems, CPS) (der einzelnen Behandlungsvorrichtungen).

In der hier gezeigten Ausführungsform befinden sich der ID Pool IDP und die Identifikator-Erzeugungseinrichtung IDG (ID Generator) als Service Repositories innerhalb der Cloud bzw. der Speichereinrichtung 152. Weiterhin ist eine ID Generator Anwendung IDA ("ID Generator App") vorgesehen, welche eine (entsprechende) Service Instanz darstellt.

In der hier dargestellten Ausführungsform wird nicht mehr über den Umweg einer Datenübermittlungseinrichtung 96 kommuniziert, sondern Sensorwerte und andere Daten bevorzugt direkt von der Maschine bzw. den einzelnen Behandlungsvorrichtungen an die Speichereinrichtung (Cloud) übermittelt. Auch hierbei kann als Protokoll MQTT zum Einsatz kommen. Eine Kommunikation zwischen der Speichereinrichtung 152 ("Krones PET Cloud") und der Speichereinrichtung 150 ("Syskron Cloud") kann über ein sogenanntes Bridgen ("Überbrücken") der MQTT Broker als sogenannte MQTT Bridge erreicht werden.

Das Bezugszeichen P20 kennzeichnet einen Pfeil, welcher einen Datenaustausch zwischen der Druckeinrichtung 50 ("ID Printer Unit") und der ID Generator Anwendung IDA veranschaulicht, in welchem die Druckeinrichtung 50 eine Anfrage zur Übermittlung eines Identifikators ("Request: ID") an die ID Generator Anwendung IDA stellt. Der Pfeil P22 veranschaulicht eine Übermittlung eines Identifikators von der ID Generator Anwendung IDA an die Druckeinrichtung 50 ("Response: ID").

Die Pfeile P24, P26 kennzeichnen jeweils eine Datenübermittlung von einer Behandlungsvorrichtung, hier der Inspektionsvorrichtung 60 und einer Kontrollvorrichtung 90 ("Checkmat"), in welcher ein Update des Status der Flasche 10 an die Integrationsschicht 140 übermittelt wird. So übermittelt die Inspektionsvorrichtung 60 den aktualisierten Status des Behältnisses, dass die Flasche "OK" ist und der Pre-Form aufgeblasen ist (Übermittlung der Nachricht: "Read, update Status = Flasche OK, Preform aufgeblasen"). Die Kontrollvorrichtung 90 übermittelt der Integrationsschicht 140 den nunmehr aktuellen Status des Behältnisses, dass sich die Flasche in einem befüllten und verschlossenen Zustand befindet (Übermittlung der Nachricht: "Read, update Status = Flasche OK, befüllt und verschlossen"). Schließlich kennzeichnet der Pfeil P29 eine Datenkommunikation zwischen der Etikettiervorrichtung 120 und der Integrationsschicht 140, in welcher die Etikettiervorrichtung eine Anfrage an die Integrationsschicht 140 übermittelt und um Übermittlung der ID und/oder Datenwerten bittet ("Request: ID, Data"). P30 kennzeichnet schließlich eine Übermittlung der Antwortnachricht ("Response: ID, Data"), in welcher zu einem Identifikator zugehörige Datenwerte an die Etikettiervorrichtung übermittelt werden.

### Bezugszeichenliste

- 1: Anlage
- 10: Behältnis
- 20: Transporteinrichtung
- 42: Identifikator
- 50: Druckeinrichtung
- 70: Fülleinrichtung
- 80: Verschließeinrichtung
- 85: Checkmat
- 90: Checkmat
- 94: Erfassungseinrichtung
- 96: Datenübermittlungseinrichtung, Ready Kit
- 110: Trocknungseinrichtung
- 120: Etikettiereinrichtung
- 130: Verpackungseinrichtung
- 140: Kommunikationseinrichtung, Bus zur Datenkommunikation
- 150: Speichereinrichtung
- 152: Speichereinrichtung
- IDG: Identifikator-Erzeugungseinrichtung, ID Generator
- IDP: ID Pool
- P1 - P39: Pfeile

## Patentansprüche

1. Verfahren zum Betreiben einer Anlage (1) zur Behandlung einer Vielzahl von Behältnissen (10), insbesondere Flaschen, bevorzugt Kunststoffbehältnisse, mit den Schritten:
- Bereitstellen wenigstens eines Behältnisses (10), welches ein Identifikationsmittel (12) aufweist, mittels welchem das Behältnis (10) eindeutig identifizierbar ist, wobei dem Identifikationsmittel (12) ein Identifikator, insbesondere eindeutig, zuordenbar ist, welcher in wenigstens einer Speichereinrichtung (152) abgelegt ist, welche Cloud-basiert und/oder wenigstens zeitweise über ein öffentliches Netzwerk mit der Anlage (1) zur Datenkommunikation verbunden oder verbindbar ist;
- Behandeln des Behältnisses (10) mit wenigstens einer Behandlungsvorrichtung der Anlage (1);
- Bevorzugt Transportieren des Behältnisses (10) wenigstens zeitweise in der Behandlungsvorrichtung mit wenigstens einer Transporteinrichtung (20);
- Erhebung wenigstens eines Datenwerts in Bezug auf das Behältnis (10) und/oder in Bezug auf wenigstens einen Behandlungsschritt des Behältnisses (10), wobei wenigstens zwei Datenwerte und bevorzugt eine Vielzahl von Datenwerten verschiedener Art erhoben werden, welche demselben Identifikationsmittel und/oder demselben Identifikator zuordenbar sind und welche bevorzugt durch wenigstens zwei und besonders bevorzugt eine Vielzahl verschiedener Behandlungsvorrichtungen erhoben werden;
- Bereitstellen des wenigstens einen Datenwerts zur Übermittlung und/oder Ablegung in der Speichereinrichtung (152);
- Bevorzugt Herstellung einer Zuordnung zwischen dem Datenwert und dem jeweiligen Identifikator des Behältnisses (10).

2. Verfahren nach Anspruch 1,
**dadurch gekennzeichnet, dass**
eine Identifikator-Erzeugungseinrichtung der Anlage (1) den Identifikator und bevorzugt eine Vielzahl an Identifikatoren, welche zu einer eindeutigen Identifizierung eines Behältnisses (10) geeignet und bestimmt sind, bereitstellt.

3. Verfahren nach einem der vorangegangenen Ansprüche,
**dadurch gekennzeichnet, dass**
die Behältnisse (10) während ihrer Herstellung und/oder zeitlich vor und/oder während einem Umformvorgang von einem Kunststoffvorformling zu dem Kunststoffbehältnis mit dem Identifikationsmittel (12) versehen werden.

4. Verfahren nach einem der vorangegangenen Ansprüche,
**dadurch gekennzeichnet, dass**
das Identifikationsmittel (12) wenigstens einmal und bevorzugt mehrmals erfasst wird, insbesondere bevor das Behältnis (10) aus der Behandlungsvorrichtung abgeführt wird.

5. Verfahren nach wenigstens einem der vorangegangenen Ansprüche,
**dadurch gekennzeichnet, dass**
der Datenwert aus einer Gruppe ausgewählt ist, die Informationen in Bezug auf das Behältnis, auf einen Messwert, auf einen Behandlungsparameter, auf einen Prozessdatenwert, auf einen Zeitstempel, auf ein Produktionsdatum, auf ein Produkt für das Behältnis, auf die Behandlungsvorrichtung, auf Maschinendaten, auf eine Umverpackung, auf die Transporteinrichtung, auf eine Vertriebsmodalität, auf einen Vertriebsort und dergleichen enthält.

6. Anlage (1) zur Behandlung einer Vielzahl von Behältnissen (10) mit wenigstens einer Behandlungsvorrichtung, welche dazu geeignet und bestimmt ist, an den Behältnissen (10) wenigstens einen Behandlungsschritt vorzunehmen, wobei die Behandlungsvorrichtung wenigstens eine Datenerhebungseinrichtung (85, 90) aufweist, welche zur Datenerhebung wenigstens eines Datenwerts in Bezug auf das Behältnis (10) und/oder in Bezug auf wenigstens einen Behandlungsschritt geeignet und bestimmt ist, wobei die Anlage (1) wenigstens eine Erfassungseinrichtung (94) zum Erfassen eines Identifikationsmittels (12) der Behältnisse (10) aufweist, mittels welchem die Behältnisse (10) jeweils eindeutig identifizierbar sind,
**dadurch gekennzeichnet, dass**
die Anlage (1) eine Kommunikationseinrichtung aufweist, welche dazu konfiguriert ist, wenigstens zeitweise eine Kommunikationsverbindung mit wenigstens einer Speichereinrichtung (152) herzustellen, welche Cloud-basiert und/oder zur Datenkommunikation wenigstens zeitweise über ein öffentliches Netzwerk mit der Anlage (1) verbunden oder verbindbar ist, wobei in der Speichereinrichtung (152) ein dem Identifikationsmittel (12) eindeutig zuordenbarer Identifikator abgelegt und/oder ablegbar ist, wobei die Behandlungsvorrichtung dazu konfiguriert, geeignet und bestimmt ist, der Kommunikationseinrichtung (140) den wenigstens einen Datenwert zur Übermittlung an die und/oder zur Ablegung in der Speichereinrichtung (152) bereitzustellen, wobei die Behandlungsvorrichtung und insbesondere eine Vielzahl von Behandlungseinrichtungen ausgewählt ist aus einer Gruppe, die eine Erwärmungsvorrichtung zum Erwärmen eines Vorformlings, eine Umformvorrichtung zum Umformen eines Kunststoffvorformlings zu einer Kunststoffflasche, eine Sterilisationsvorrichtung zur Sterilisierung eines Behältnisses, insbesondere eines Kunststoffvorformlings, eine Herstellungsvorrichtung zur Herstellung einer Glasflasche, eine Füllvorrichtung zum Befüllen eines Behältnisses mit einem Produkt, eine Inspektionseinrichtung um Inspizieren eines Kunststoffvorformlings oder einer Flasche, eine Etikettiervorrichtung zum Etikettieren eines Behältnisses, eine Verschließvorrichtung zum Verschließen eines, insbesondere befüllten, Behältnisses, eine Kontrolleinrichtung, eine Verpackungseinrichtung, eine Direktdruckeinrichtung zum Bedrucken eines Behältnisses, eine Zusammenstellungsvorrichtung zum Zusammenstellen einer Vielzahl von Behältnissen zu einer Zusammenstellen, eine Zerstörvorrichtung zum Zerstören des Behältnisses und dergleichen umfasst.

7. Anlage (1) nach dem vorangegangenen Anspruch,
**dadurch gekennzeichnet, dass**
eine Datenübermittlungseinrichtung vorgesehen ist, welche die an die Speichereinrichtung (152) zu übermittelnden Datenwerte wenigstens zweier Behandlungsvorrichtungen sammelt, bevor diese an die Speichereinrichtung (152) übermittelt werden.

8. Anlage (1) nach dem Anspruch 6,
**dadurch gekennzeichnet, dass**
die Kommunikationseinrichtung eine Integrationsschicht aufweist, wobei eine Kommunikationsverbindung zwischen der Behandlungsvorrichtung und der Speichereinrichtung, insbesondere zur Übermittlung und/oder zur Abfrage von Datenwerten, ausschließlich über die Integrationsschicht herstellbar ist.

9. Anlage (1) nach einem der vorangegangenen Ansprüche 6 und 8,
**dadurch gekennzeichnet, dass**
die Kommunikationseinrichtung wenigstens einen drahtgebundenen Kommunikationsbus zur Übermittlung von Daten aufweist, über welchen eine Kommunikation der und insbesondere jeder Behandlungsvorrichtung mit der Speichereinrichtung erfolgt.

10. Anlage (1) nach einem der vorangegangenen Ansprüche,
**dadurch gekennzeichnet, dass**
die Behandlungsvorrichtung und insbesondere jede Behandlungsvorrichtung dazu geeignet und bestimmt ist, Daten in Bezug auf ein zu behandelndes Behältnis, welche von der Kommunikationseinrichtung von der Speichereinrichtung (152) übermittelt werden, zu empfangen und eine Änderung wenigstens einer Einstellung und/oder Größe und/oder wenigstens eines Prozessparameters in Bezug auf die, insbesondere individualisierte, Behandlung des zu behandelnden Behältnisses vorzunehmen.

11. System aus einer Anlage (1) gemäß einem der Ansprüche 6 - 10 und der wenigstens einen über ein öffentliches Netzwerk zugreifbaren und/oder Cloud-basierten Speichereinrichtung (152).

## Claims

1. A method for operating a plant (1) for treating a plurality of containers (10), in particular bottles, preferably plastic containers, having the steps:
- providing at least one container (10) which has an identification means (12) by which the container (10) can be uniquely identified, wherein an identifier can be assigned in particular uniquely to the identification means (12), which identifier is stored in at least one memory device (152) which is cloud-based and/or at least temporarily connected or connectable via a public network to the plant (1) for data communication;
- treating the container (10) with at least one treatment apparatus of the plant (1);
- preferably transporting the container (10) at least temporarily in the treatment apparatus with at least one transport device (20);
- collecting at least one data value with respect to the container (10) and/or with respect to at least one treatment step of the container (10), wherein at least two data values and preferably a plurality of data values of different type are collected which are assigned the same identification means and/or the same identifier and which are preferably collected by at least two and particularly preferably a plurality of different treatment apparatus;
- providing the at least one data value for transmission and/or storage in the memory device (152);
- preferably producing an assignment between the data value and the respective identifier of the container (10).

2. The method according to claim 1,
**characterized in that**
an identifier generating device of the plant (1) provides the identifier and preferably a plurality identifiers, which are suitable and intended for a unique identification of a container (10).

3. The method according to one of the preceding claims,
**characterized in that**
the containers (10) are provided with the identification means (12) during their production and/or temporal before and/or during a forming process from a plastic preform to the plastic container.

4. The method according to one of the preceding claims,
**characterized in that**
the identification means (12) is detected at least once and preferably several times, in particular before the container (10) is discharged from the treatment apparatus.

5. The method according to at least one of the preceding claims,
**characterized in that**
the data value is selected from a group containing information relating to the container, to a measured value, to a treatment parameter, to a process data value, to a time stamp, to a production date, to a product for the container, to the treatment apparatus, to machine data, to an outer packaging, to the transport device, to a distribution modality, to a distribution location and the like.

6. A plant (1) for treating a plurality of containers (10), having at least one treatment apparatus which is suitable and intended for carrying out at least one treatment step on the containers (10), wherein the treatment apparatus has at least one data collection device (85, 90) which is suitable and intended for data collection of at least one data value with respect to the container (10) and/or with respect to at least one treatment step, wherein the plant (1) has at least one detection device (94) for detecting an identification means (12) of the containers (10), by which the containers can each be uniquely identified,
**characterized in that**
the plant(1) has a communication device which is configured to at least temporarily establish a communication connection with at least one memory device (152) which is cloud-based and/or is connected or connectable to the plant(1) at least temporarily via a public network for data communication, wherein an identifier which can be uniquely assigned to the identification means (12) is stored and/or can be stored in the memory device (152), wherein the treatment apparatus is configured, suitable and intended to provide the at least one data value to the communication device (140) for transmission to and/or for storage in the memory device (152),
wherein the treatment apparatus and in particular a plurality of treatment devices is selected from a group comprising a heating apparatus for heating a preform, a forming apparatus for forming a plastic preform into a plastic bottle, a sterilizing apparatus for sterilizing a container, a production apparatus for producing a glass bottle, a filling apparatus for filling a container with a product, an inspection device for inspecting a plastic pre-form or bottle, a labeling apparatus for labeling a container, a sealing apparatus for sealing a container, a control device, a packaging device, a direct printing device for printing a container, an assembling apparatus for assembling a plurality of containers into an assembly, a destroying apparatus for destroying the container, and similar.

7. The plant (1) according to the preceding claim,
**characterized in that**
a data transmission device is provided which collects the data values of at least two treatment apparatuses to be transmitted to the memory device (152) before they are transmitted to the memory device (152).

8. The plant (1) according to claim 6,
**characterized in that**
the communication device has an integration layer, wherein a communication connection between the treatment apparatus and the memory device in particular for transmitting and/or query of data values can be established exclusively via the integration layer.

9. The plant (1) according to one of the preceding claims 6 and 8,
**characterized in that**
the communication device has at least one wired communication bus for transmitting data, via which communication of the and in particular each treatment apparatus with the memory device takes place.

10. The plant (1) according to the preceding claim,
**characterized in that**
the treatment apparatus and in particular each treatment apparatus is suitable and intended to receive data relating to a container to be treated, transmitted by the communication device from the memory device (152), and to make a change in at least one setting and/or size and/or at least one process parameter relating to the, in particular individualized, treatment of the container to be treated.

11. A system of a plant (1) according to one of claims 6-10 and the at least one public network-accessible and/or cloud-based memory device (152).

## Revendications

1. Procédé pour faire fonctionner une installation (1) destinée à traiter une pluralité de récipients (10), en particulier de bouteilles, de manière préférée de récipients en matière plastique, avec les étapes :
- de fourniture d'au moins un récipient (10), lequel présente un moyen d'identification (12), au moyen duquel le récipient (10) peut être clairement identifié, dans lequel un identifiant peut être associé, en particulier clairement, au moyen d'identification (12), lequel est stocké dans au moins un système de mémorisation (152), lequel est connecté ou peut être connecté à l'installation (1) pour la communication de données sur la base du nuage et/ou au moins temporairement par l'intermédiaire d'un réseau public ;
- de traitement du récipient (10) avec au moins un dispositif de traitement de l'installation (1) ;
- de transport de manière préférée du récipient (10) au moins temporairement dans le dispositif de traitement avec au moins un système de transport (20) ;
- de collecte d'au moins une valeur de données concernant le récipient (10) et/ou concernant au moins une étape de traitement du récipient (10), dans lequel au moins deux valeurs de données et de manière préférée une pluralité de valeurs de données de type différent sont collectées, lesquelles peuvent être associées au même moyen d'identification et/ou au même identifiant et lesquelles sont collectées de manière préférée par au moins deux et de manière particulièrement préférée une pluralité de différents dispositifs de traitement ;
- de fourniture de l'au moins une valeur de données pour le transfert et/ou le stockage dans le système de mémorisation (152) ;
- d'élaboration de manière préférée d'une association entre la valeur de données et l'identifiant respectif du récipient (10).

2. Procédé selon la revendication 1,
**caractérisé en ce que**
un système de génération d'identifiant de l'installation (1) fournit l'identifiant et de manière préférée une pluralité d'identifiants, lesquels sont adaptés et se destinent à une identification claire d'un récipient (10).

3. Procédé selon l'une quelconque des revendications précédentes,
**caractérisé en ce que**
les récipients (10) sont pourvus du moyen d'identification (12) pendant leur fabrication et/ou dans le temps avant et/ou pendant une opération de façonnage d'une préforme en matière plastique en le récipient en matière plastique.

4. Procédé selon l'une quelconque des revendications précédentes,
**caractérisé en ce que**
le moyen d'identification (12) est détecté au moins une fois et de manière préférée à maintes reprises, en particulier avant que le récipient (10) ne soit évacué du dispositif de traitement.

5. Procédé selon au moins l'une quelconque des revendications précédentes,
**caractérisé en ce que**
la valeur de données est choisie parmi un groupe, qui contient des informations concernant le récipient, une valeur de mesure, un paramètre de traitement, une valeur de données de processus, un horodatage, une date de production, un produit pour le récipient, le dispositif de traitement, des données de machine, un reconditionnement, le système de transport, une modalité de distribution, un lieu de distribution et similaires.

6. Installation (1) de traitement d'une pluralité de récipients (10) avec au moins un dispositif de traitement, lequel est adapté pour et se destine à réaliser sur les récipients (10) au moins une étape de traitement, dans laquelle le dispositif de traitement présente au moins un système de collecte de données (85, 90), lequel est adapté pour et se destine à collecter des données d'au moins une valeur de données concernant le récipient (10) et/ou concernant au moins une étape de traitement, dans laquelle l'installation (1) présente au moins un système de détection (94) destiné à détecter un moyen d'identification (12) des récipients (10), au moyen duquel les récipients (10) peuvent être identifiés respectivement clairement,
**caractérisée en ce que**
l'installation (1) présente un système de communication, lequel est configuré pour établir au moins temporairement une connexion de communication avec au moins un système de mémorisation (152), lequel est connecté ou peut être connecté à l'installation (1) sur la base du nuage et/ou pour la communication de données au moins temporairement par l'intermédiaire d'un réseau public, dans laquelle un identifiant pouvant être associé clairement au moyen d'identification (12) est stocké ou peut être stocké dans le système de mémorisation (152), dans laquelle le dispositif de traitement est configuré, est adapté pour et se destine à fournir au système de communication (140) l'au moins une valeur de données pour le transfert au système de mémorisation (152) et/ou pour le stockage dans celui-ci,
dans laquelle le dispositif de traitement et en particulier une pluralité de systèmes de traitement sont choisis parmi un groupe, qui comprend un dispositif de chauffage destiné à chauffer une préforme, un dispositif de façonnage destiné à façonner une préforme en matière plastique en une bouteille en matière plastique, un dispositif de stérilisation destiné à stériliser un récipient, en particulier une préforme en matière plastique, un dispositif de fabrication destiné à fabriquer une bouteille en verre, un dispositif de remplissage destiné à remplir un récipient d'un produit, un système d'inspection pour inspecter une préforme en matière plastique ou une bouteille, un dispositif d'étiquetage destiné à étiqueter un récipient, un dispositif de fermeture destiné à fermer un récipient en particulier rempli, un système de contrôle, un système de conditionnement, un système d'impression directe destiné à imprimer un récipient, un dispositif de regroupement destiné à regrouper une pluralité de récipients en un regroupement, un dispositif de destruction destiné à détruire le récipient et similaires.

7. Installation (1) selon la revendication précédente,
**caractérisée en ce que**
est prévu un système de transfert de données, lequel collecte les valeurs de données, à transférer au système de mémorisation (152), d'au moins deux dispositifs de traitement avant que celles-ci ne soient transférées au système de mémorisation (152).

8. Installation (1) selon la revendication 6,
**caractérisée en ce que**
le système de communication présente une couche d'intégration, dans laquelle une connexion de communication peut être établie entre le dispositif de traitement et le système de mémorisation, en particulier pour transférer et/ou pour consulter des valeurs de données exclusivement par l'intermédiaire de la couche d'intégration.

9. Installation (1) selon l'une quelconque des revendications précédentes 6 et 8,
**caractérisée en ce que**
le système de communication présente au moins un bus de communication filaire destiné à transférer des données, par l'intermédiaire duquel une communication du et en particulier de chaque dispositif de traitement se fait avec le système de mémorisation.

10. Installation (1) selon l'une quelconque des revendications précédentes, **caractérisée en ce que**
le dispositif de traitement et en particulier chaque dispositif de traitement est adapté pour et se destine à recevoir des données concernant un récipient à traiter, lesquelles sont transférées par le système de communication du système de mémorisation (152) et pour réaliser une modification d'au moins un réglage et/ou d'une taille et/ou d'au moins un paramètre de processus concernant le traitement, en particulier personnalisé, du récipient à traiter.

11. Système composé d'une installation (1) selon l'une quelconque des revendications 6 - 10 et de l'au moins un système de stockage (152) pouvant être consulté par l'intermédiaire d'un réseau public et/ou sur la base du nuage.
